(19) **Europäisches Patentamt / European Patent Office / Office européen des brevets**

(11) **EP 4 303 194 B1**

(12) **EUROPEAN PATENT SPECIFICATION**

(45) Date of publication and mention
of the grant of the patent:
**10.09.2025 Bulletin 2025/37**

(21) Application number: **23161050.2**

(22) Date of filing: **09.03.2023**

(51) International Patent Classification (IPC):
*C02F 9/20* *(2023.01)*     *C02F 1/28* *(2023.01)*
*C02F 1/32* *(2023.01)*     *C02F 1/42* *(2023.01)*
*C02F 1/44* *(2023.01)*     *C02F 1/68* *(2023.01)*

(52) Cooperative Patent Classification (CPC):
**C02F 9/20;** C02F 1/283; C02F 1/32; C02F 1/42;
C02F 1/444; C02F 1/68; C02F 2001/425;
C02F 2201/006; C02F 2209/001; C02F 2209/003;
C02F 2209/05; C02F 2301/043

(54) **CARTRIDGE FOR A SYSTEM TREATING AND DISPENSING AN AQUEOUS LIQUID**

KARTUSCHE FÜR EIN SYSTEM ZUR BEHANDLUNG UND ABGABE EINER WÄSSRIGEN FLÜSSIGKEIT

CARTOUCHE POUR UN SYSTÈME DE TRAITEMENT ET DE DISTRIBUTION D'UN LIQUIDE AQUEUX

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.07.2022 EP 22306023**
**09.11.2022 EP 22315267**

(43) Date of publication of application:
**10.01.2024 Bulletin 2024/02**

(73) Proprietor: **Compagnie Gervais Danone**
**75009 Paris (FR)**

(72) Inventors:
• **JACOB, Paul**
**91300 Massy (FR)**
• **DESSAUGE, Lucas**
**91300 Massy (FR)**
• **DI GIOIA, Lodovico**
**91300 Massy (FR)**
• **DICKENS, Anthony Mark James**
**CB2 9NH Cambridge (GB)**
• **ZAMEEL, Hazim**
**SK8 6RG Cheshire (GB)**

(74) Representative: **Regimbeau**
**20, rue de Chazelles**
**75847 Paris Cedex 17 (FR)**

(56) References cited:
EP-A1- 2 899 164          WO-A1-2019/175603
CA-A1- 2 477 939          DE-U1- 202005 019 293
US-A1- 2006 070 936       US-A1- 2009 283 464
US-A1- 2015 336 034

## Description

## TECHNICAL FIELD

The present disclosure relates to a cartridge for a system for treating and dispensing an aqueous liquid.

## BACKGROUND

Known water treatment systems includes treating components which change or improve the taste of water before said water is dispensed to a user. For instance, water treatment systems modifying the mineral content of an aqueous liquid are described in EP2899164A1 and WO2019/175603A1.

However, treating components may wear out. The more a treating component is used, the less it changes or improves the taste of water. At some point, such a treating component may need to be replaced.

To that end, it has been proposed to store a treating component in a cartridge, said cartridge being a removable unit. The cartridge can be removed from the system embedding it and replaced by a brand-new cartridge.

## SUMMARY

A goal of the present disclosure is to propose a cartridge able to be placed in a water treatment device, and which can be used for implementing various water treatments.

This goal is achieved by the cartridge of claim 1. The cartridge comprises:

- a first line comprising:

  ○ a first inlet for inputting a first aqueous liquid into the cartridge,
  ○ a purifier configured to purify the first aqueous liquid without substantially modifying an amount of minerals in the first aqueous liquid,
  ○ a first outlet for outputting the first aqueous liquid outside the cartridge after the first aqueous liquid has been purified by the purifier; and

- a second line separated from the first line, the second line comprising:

  ○ a second inlet for inputting a second aqueous liquid into the cartridge,
  ○ a minerality modifying device configured to substantially modify an amount of minerals in the second aqueous liquid, and
  ○ a second outlet for outputting the aqueous liquid outside the cartridge after the second aqueous liquid has been treated by the minerality modifying device.

- a cylinder storing a liquid mineral concentrate, the cylinder delimiting an access allowing a plunger external to the cartridge to be releasably inserted in the cylinder,
- a gasket sealing the cylinder and able to be translated with respect to the cylinder by the plunger, thereby causing an injection of some of the liquid mineral concentrate into the first line.

Since the cartridge has two separate lines, a system embedding the cartridge can:

- selectively use the first line for purifying water, and/or
- selectively use the second line in order to change its level of minerality, or
- use both lines in parallel, and/or
- use both lines by arranging the second line downstream the first line, and/or
- use both lines by arranging the second line is upstream the first line.

Thus, the cartridge can be embedded in various systems which are supposed to implement different water treatments, and can even be embedded in systems able to switch between multiple modes implementing different water treatments.

In particular, the proposed cartridge is more versatile than a hypothetical cartridge which would include a purifier and a minerality modifying device arranged in series in a same line. With such a cartridge, the more the aqueous liquid is purified, the more the amount of minerals in the aqueous liquid changes. Therefore, the water may not be pure enough when a desired level of minerality is reached. This problem does not occur with the proposed cartridge since the purifier and the minerality modifying device are arranged in separate lines.

Optional features of the cartridge are detailed below and in the dependent claims.

Optionally, the purifier is arranged such that the first aqueous liquid flows through the purifier in a first direction, and the minerality modifying device is arranged such that the second aqueous liquid flows through the minerality modifying device in the first direction.

Optionally, the first line comprises a first pipe for conveying the first aqueous liquid in a second direction opposite to the first direction, and the second line comprises a second pipe for conveying the second aqueous liquid in the second direction.

Optionally, the first line comprises a first pipe for conveying the first aqueous liquid, wherein the purifier extends about the first pipe, and/or the second line comprises a second pipe for conveying the second aqueous liquid, wherein the minerality modifying device extends about the second pipe.

Optionally, the first line comprises a first pipe for conveying the first aqueous liquid, the second line comprises a second pipe for conveying the second aqueous liquid, and one of the first pipe 92 and the second pipe extends about the other of the first pipe and the second pipe.

Optionally, the first line or the second line comprises a further minerality modifying device, wherein one of the minerality modifying device and the further minerality modifying device is a mineralizer, and the other of the modifying device and the further minerality modifying device is a demineralizer.

Optionally, the minerality modifying device is a demineralizer.

Optionally, the second line comprises a solid mineralizer.

Optionally, the first inlet, the first outlet, the second inlet and the second outlet are four openings, wherein the four openings comprise a central opening and three annular opening extending about the central opening.

Optionally, the first inlet and the first outlet are arranged such that the first aqueous liquid enters in the cartridge through the first inlet by flowing in a first direction, then exits the cartridge through the first outlet by flowing in a second direction opposite to the first direction, and/or the second inlet and the second outlet are arranged such that the second aqueous liquid enters in the cartridge through the second inlet by flowing in a first direction, then exits the cartridge through the second outlet by flowing in a second direction opposite to the first direction.

Optionally, the cartridge comprises a casing comprising a first part storing the purifier and a second part storing the minerality modifying device, wherein the second part is separable from the first part.

Another aspect of the present disclosure is a system comprising:

- a tank for storing an aqueous liquid,
- an outlet for dispensing the aqueous liquid to a user,
- the cartridge described above, wherein the cartridge is a removable unit of the system,
- a circuit configured to circulate the aqueous liquid in the first line of the cartridge and in the second line of the cartridge before the aqueous liquid reaches the outlet.

The circuit may be configured to be set into:

- a first mode wherein the circuit forms a first path fluidically connecting the tank, the first line of the cartridge and the outlet, wherein the circuit circulates the aqueous liquid in the first path such that the aqueous liquid passes through the first line of the cartridge before reaching the outlet, and wherein the circuit prevents the aqueous liquid from reaching the second line of the cartridge, and
- a second mode wherein the circuit forms a second path fluidically connecting the tank, the second line and the outlet, wherein the circuit circulates the aqueous liquid in the second path such that the aqueous liquid passes through the second line of the cartridge before reaching the outlet, and wherein the circuit prevents the aqueous liquid from reaching the first line of the cartridge.

The circuit may be configured to be set into:

- a first mode wherein the circuit forms a first closed loop fluidically connecting the first line to the tank, wherein the circuit circulates the aqueous liquid in the first closed loop such that the aqueous liquid flows through the first line of the cartridge and through the tank, and wherein the circuit prevents the aqueous liquid from reaching the outlet and from reaching the second line of the cartridge,
- a second mode wherein the circuit forms a second closed loop fluidically connecting the second line to the tank, wherein the circuit circulates the aqueous in the second closed loop such that the aqueous liquid flows through the second line of the cartridge and through the tank, and wherein the circuit prevents the aqueous liquid from reaching the outlet, and
- a third mode wherein the circuit forms a path fluidically connecting the tank to the outlet, such that the aqueous liquid flows from the tank to the outlet.

**BRIEF DESCRIPTION OF THE FIGURES**

Further details, features and advantages are explained in more detail below with the aid of exemplary embodiments that are illustrated in the figures. The first embodiment does not form part of the present invention. Only the second embodiment falls under the scope of the claimed invention.

Figure 1 is a schematic representation of a system according to a first embodiment.

Figure 2 is a side perspective view of a cartridge according to a first embodiment.

Figure 3 is an exploded view of components of the cartridge according to the first embodiment.

Figure 4, 5 and 6 are cross-sectional views of the cartridge according to the first embodiment.

Figure 7 shows the system according to the first embodiment while a circuit thereof is set in a first mode.

Figure 8 shows the system according to the first embodiment while a circuit thereof is set in a second mode.

Figure 9 shows steps of a rinsing method according to an embodiment.

Figure 10 shows steps of method of dispensing a predefined volume of aqueous liquid to a user, according to an embodiment.

Figure 11a is a schematic representation of a predefined volume of aqueous liquid in a container, after this predefined volume has been dispensed by means of a method according to a first embodiment.

Figure 11b is a schematic representation of a predefined volume of aqueous liquid in a container, after this predefined volume has been dispensed by means of a method according to a second embodiment.

Figure 12 is a schematic representation of a system according to a second embodiment.

Figure 13 is a side perspective view of a cartridge according to a second embodiment.

Figure 14, 15 are cross-sectional views of the cartridge according to the second embodiment.

Figure 16 is a perspective view of the cartridge according to the second embodiment coupled to components of a system.

Figure 17 is a perspective view of the cartridge according to the second embodiment, while the cartridge is placed in a system.

Figure 18 is a cross-sectional view of the cartridge according to the second embodiment, while the cartridge is placed in a system.

Figure 19 shows the system according to the second embodiment while a circuit thereof is set in a first mode.

Figure 20 shows the system according to the second embodiment while a circuit thereof is set in a second mode.

Figure 21 shows the system according to the second embodiment while a circuit thereof is set in a third mode.

## DETAILED DESCRIPTION OF EMBODIMENTS

### 1) Definitions

In the present disclosure, "purifying" an aqueous liquid means removing at least one contaminant from the aqueous liquid. The amount of contaminants in a purified aqueous liquid shall be lower than the amount of contaminants in the aqueous liquid before purification. In other words, a purification may be partial. Examples of contaminants removed by the purifier are: heavy metals such as lead (Pb), chlorine and disinfection byproducts such as trihalomethanes, volatile organic compounds such as odours, organic compounds such as pesticides, pharmaceuticals, endocrine disruptors and microorganisms such as pathogenic protozoa, bacteria, viruses.

In the present disclosure, a "mineral" is defined as any cation selected in the group consisting of Ca, Mg, Na and K and any anion selected in the group consisting in bicarbonates, Cl and $SO_4$.

In the present disclosure, a treatment "substantially" modifying the amount of minerals of any aqueous liquid is defined as a treatment which would increase or decrease the conductivity of a reference aqueous liquid by more than 10 %, the reference aqueous liquid having a conductivity equal to 595 μS/cm at 25° C before treatment.

In contrast, a treatment which does not "substantially" modify an amount of minerals of any aqueous liquid is defined in the present disclosure as a treatment which would increase or decrease the conductivity of a reference aqueous liquid by no more than 10 %, the reference aqueous liquid having a conductivity equal to 595 μS/cm at 25° C before treatment.

To check whether a treatment "substantially" modifies or not an amount of minerals in any aqueous liquid, the following protocol can be implemented.

- A reference aqueous liquid is stored in a first tank at 25° C. The first tank is for instance a beaker of 50 mL.

- A conductivity $\chi_1$ of the reference aqueous liquid in the first tank is measured using a measurement system. For example, the measurement system comprises a conductivity probe (WTW TetraCon 925 IDS) coupled with a conductivity meter (WTW Multi 3620 IDS). The reference aqueous liquid is selected such that $\chi_1$ is equal to 595 μS/cm. An example of reference aqueous liquid is for example the Evian natural mineral water, which has the following mineral composition:

  ◦ Calcium: 80 mg/L

  ◦ Magnesium: 26 mg/L

  ◦ Potassium 1 mg/L

  ◦ Sodium 6,5 mg/L

  ◦ Bicarbonates 360 mg/L

  ◦ Chloride 10 mg/L

  ◦ Sulphate 15 mg/L

  ◦ Nitrates 3,8 mg/L

- Then, the reference aqueous liquid is inputted in a device implementing the treatment to be checked.

- After being treated by said device, the reference aqueous liquid outputted by the device is collected in a second tank at 25 ° C. The second tank is for example a beaker of 50 mL.

- A second conductivity $\chi_2$ of the reference aqueous liquid in the second tank is measured using the same measurement system.

- If $\frac{|\chi_2 - \chi_1|}{\chi_1} > 0.1$ then the treatment is regarded as a treatment which "substantially" modifies the amount of minerals of any aqueous liquid.

- If $\frac{|\chi_2 - \chi_1|}{\chi_1} \leq 0.1$ then the treatment is a treatment is regarded as a treatment which does not "substantially" modify the amount of minerals of any aqueous liquid.

In the present disclosure, "demineralizing" an aqueous liquid is defined as a treatment which decreases the conductivity of the aqueous liquid.

In contrast, "mineralizing" an aqueous liquid is defined in the present disclosure as a treatment which increases the conductivity of the aqueous liquid.

## 2) "Single pass" system

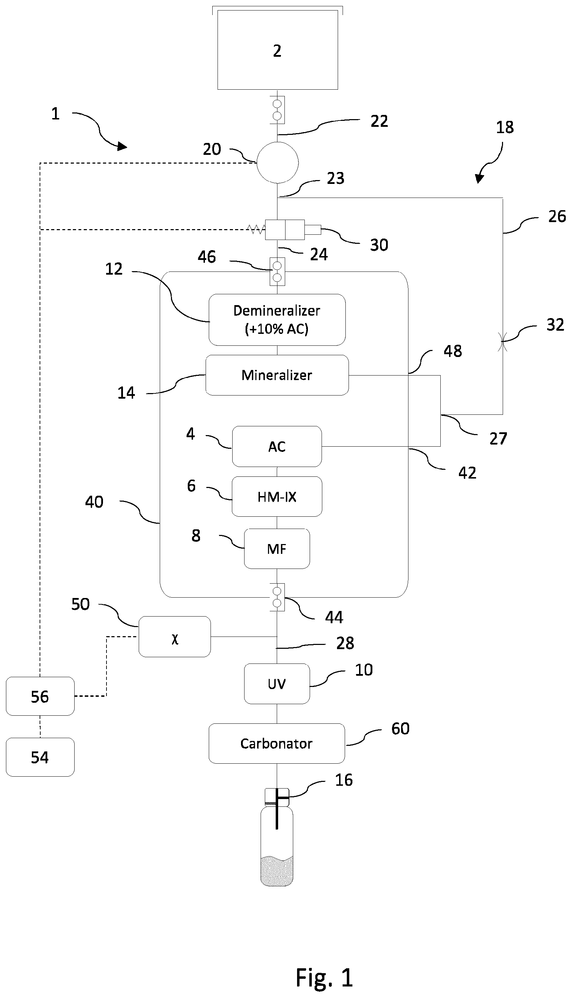

Referring to **figure 1,** a system 1 according to a first embodiment comprises a tank 2 and components through which an aqueous liquid can flow, including: at least one purifier 4, 6, 8, 10, at least one minerality modifying device 12, 14 and an outlet 16. The system 1 further comprises a circuit 18 fluidically interconnecting components 2, 4, 6, 8, 10, 12, 14, 16.

## Tank / outlet

The tank 2 is designed to store an aqueous liquid. The tank 2 includes an inlet for feeding the tank 2 with aqueous liquid, coming for instance from a tap. The inlet may be closed by a cover or any other suitable closing means.

The tank 2 is preferably a removable element, which may be removed from the system 1 in order to be filled with aqueous liquid away from the system, then put back in the system 1 once it has been filled.

The outlet 16 is designed to output an aqueous liquid out of the system 1. It is used to dispense an aqueous liquid stored in the tank 2 to a user. The outlet 16 may comprise a connector adapted to be releasably and mechanically coupled with an external container, such as a decanter. For instance, the connector includes a thread adapted to be coupled with a neck of the external container.

## Purifier(s)

Each purifier of the system 1 is a device configured to purify an aqueous liquid without substantially modifying an amount of minerals of the aqueous liquid. The system 1 according to the first embodiment actually comprises several purifiers 4, 6, 8, 10 carrying out this function but having different structures.

A first purifier 4 of the system 1 is an activated carbon (AC). The AC may be configured to remove at least one of the following contaminants from the aqueous liquid: chlorine, at least one disinfection by-product, at least one VOC, at least one organic pollutant, at least one heavy metal. The activated carbon is granular (GAC). Alternatively, the activated carbon could be in the form of a felt or pellets or carbon block.

A second purifier 6 of the system 1 is an ion exchange resin or adsorption media or chelating media (HM-IX). The second purifier 6 may be configured to remove at least one of the following contaminants from the aqueous liquid: at least one heavy metal, at least one microbiological contaminant. The second purifier 8 is arranged downstream the first purifier 4.

A third purifier 8 of the system 1 is a microfilter (MF). The microfilter is configured to capture particles present in the aqueous liquid and/or released by at least one other purifier, such as the first purifier 4 or the second purifier 6. The microfilter MF may be replaced by an ultrafilter (UF). The third purifier 8 is arranged downstream the second purifier 6.

The first purifier 4, the second purifier 6 and the third purifier 8 are arranged in series, in that order.

A fourth purifier 10 of the system 1 is a UV light configured to irradiate the aqueous liquid with a UV radiation, the UV radiation preferably having a wavelength in the range going from 230 to 290 nanometers. The fourth purifier 10 is arranged downstream the third purifier 8.

In accordance with the definition provided above, any of the purifiers 4, 6, 8, 10 is configured to increase or decrease the conductivity of a reference aqueous liquid by no more than 10 %, the reference aqueous liquid having a conductivity equal to 595 $\mu$S/cm at 25° C before purification.

Preferably, all purifiers of the system 1 form together a purification system configured to increase or decrease the conductivity of the reference aqueous liquid as described above by no more than 5 %.

## Minerality modifying devices

Each minerality modifying device 12, 14 of the system 1 is configured to modify an amount of minerals of an aqueous liquid. The amount of minerals may be modified in two different ways: it may be decreased or increased. Consequently, the conductivity of an aqueous liquid is increased or decreased by each minerality modifying device 12, 14.

A first minerality modifying device of the system 1 according to the first embodiment is a demineralizer 12. In accordance with the definition provided above, the demineralizer 12 is configured to decrease the conductivity of an aqueous liquid.

The demineralizer 12 may be further configured to decrease the pH of the aqueous liquid. In other words, an aqueous liquid flowing through the demineralizer 12 is acidified and demineralized.

The demineralizer 12 may comprise a dealkalization resin arranged to capture calcium and magnesium cations associated with bicarbonate anions, such as a weak acid cation resin (WAC). The dealkalization resin does not require a waste line in contrast with a reverse osmosis (RO) system. Therefore, using the dealkalization resin instead of a reverse osmosis system for demineralizing an aqueous liquid avoids wasting water.

Alternatively, the demineralizer may comprise a decationization resin or a combination of decationization and deanionization resin, such as strong acid cation (SAC) resin, a weak base anion resin (WBA) or a strong base anion resin (SBA). Such resins may also be combined and arranged in any order, to capture calcium and magnesium cations associated with bicarbonate anions or all cations and some or all anions.

The demineralizer 12 may further comprises AC mixed with its resin. The purpose of the AC is to protect the resin from chlorine oxidation and to make it free-flowing to easily fill the demineralizer during manufacturing. The weight of AC is preferably equal or less than 10% of the weight of the resin.

A second minerality modifying device of the system 1 is a mineralizer 14. In accordance with the definition provided above, the mineralizer 14 is configured to increase the conductivity of an aqueous liquid.

The mineralizer 14 may be configured to increase the amount of minerals in an aqueous liquid (and its conductivity) only if the aqueous liquid has a pH lower than a threshold. For example, the mineralizer 14 may increase the amount of minerals in an aqueous liquid only if the aqueous liquid is acidic (in this case the pH threshold is 7). in an embodiment not forming part of the present invention the mineralizer 14 is a solid mineralizer, i.e. stores a solid mineral arranged to dissolve when an aqueous liquid is flowing through the solid mineralizer 14, thereby mineralizing said aqueous liquid. This dissolution occurs only if the aqueous liquid has a pH lower than the above-mentioned threshold. In the case of some solid minerals like MgO, minerals may be released regardless of the pH to create alkaline water.

The mineralizer 14 is a liquid mineralizer, i.e., stores a liquid mineral concentrate to be mixed with an aqueous liquid. The liquid mineral is stored in a cylinder (or barrel) having a nozzle, and a plunger mobile relative to the cylinder. The liquid mineral can be expelled by the nozzle by moving the plunger in translation relative to the cylinder. An actuator is configured to move the plunger relative to the cylinder. The actuator may comprise a stepper motor coupled with a lead screw assembly.

The liquid mineral concentrate may comprise any inorganic or organic salts. More particularly, the liquid mineral concentrate may comprise a material selected from the group consisting of: sodium or potassium bicarbonate; sodium or potassium carbonate; calcium or magnesium bicarbonate; calcium, magnesium, sodium or potassium chloride; magnesium, sodium or potassium sulfate, and combinations thereof. Optionally, the liquid mineral concentrate may comprise of trace elements beneficial for health such as zinc, selenium, copper and/or vitamins.

In the following, it will be detailed an embodiment in which the mineralizer 14 is of solid type, provided that this solid mineralizer can be replaced by a liquid mineralizer.

**Circuit**

The circuit 18 comprises a collection of pipes interconnecting the different components of the system 1.

The circuit 18 further comprises a pump 20 configured to circulate the aqueous liquid, so that the aqueous liquid can reach and be treated by the different components of the system 1. When the pump 20 is switched off, any aqueous liquid present in the system 1 stagnates.

Preferably, the pump 20 is configured to pump liquid from the tank 2 at a constant flowrate.

The circuit 18 comprises an input line 22, a minerality modifying line 24, a bypass line 26 and an dispense line 28.

The input line 22 includes the tank 2 and the pump 20.

The minerality modifying line 24 is arranged downstream the input line 22. The minerality modifying line 24 includes the minerality modifying devices 12, 14.

The bypass line 26 is also arranged downstream the input line 22. The bypass line 26 bypasses the minerality modifying devices 12, 14.

The minerality modifying line 24 and the bypass line 26 are both fluidically connected to the input line 22 at a splitting section 23, and are both fluidically connected to the dispense line 28 at a junction section 27 downstream the splitting section 23. In the embodiment shown in figure 1, the splitting section 23 is located between the purifier 6 and the demineralizer 12, and the junction section 27 is located between the mineralizer 14 and the purifier 8.

The dispense line 28 is arranged downstream the minerality modifying line 24 and downstream the bypass line 26. The dispense line 28 extends from the junction section 27 to the outlet 16. The dispense line 28 includes purifier 4, 6, 8, 10.

The circuit 18 further comprises a valve assembly for selecting one of the minerality modifying line 24 and of the bypass line 26. The purpose of the valve assembly is to ensure aqueous liquid coming from the tank 2 and reaching the outlet 16 has flowed through only one of the minerality modifying line 24 and the bypass line 26. The valve assembly prevents mixture of aqueous liquid flowing in the minerality modifying line 24 and aqueous liquid flowing in the bypass line 26 upstream the outlet 16.

In the embodiment shown in figure 1, the valve assembly comprises a first valve 30 and a second valve 32.

The first valve 30 is arranged in the minerality modifying line 24, between the splitting section 23 and the junction section 27. More precisely, the second valve 32 is arranged downstream the minerality modifying devices 12, 14 and upstream the junction section 27. The first valve 30 is able to be set in two positions:

- an open position allowing an aqueous liquid coming from the tank 2 and flowing in the minerality modifying line 24 to reach the dispense line 28.
- a closed position that closes the minerality modifying line 24, thereby preventing an aqueous liquid coming from the tank 2 and processed by any of the minerality modifying devices 12, 14 to reach the dispense line 28.

The first valve 30 is an active valve. This means that a controller (described later) can set the first valve in the open position or in the closed position by sending appropriate control signals.

The second valve 32 is arranged in the bypass line 26, between the splitting section 23 and the junction section 27. The second valve 32 is able to be set in two positions:

- an open position allowing an aqueous liquid coming from the tank 2 and flowing in the bypass line 26 to reach the dispense line 28.

- a closed position that closes the bypass line 26, thereby preventing an aqueous liquid coming from the tank 2 and flowing in the bypass line 26 (from the splitting section 23 to the junction section 27) to reach the dispense line 28.

The second valve 32 is a passive valve. The passive valve is not designed to be controlled remotely using control signals. The passive valve 32 is configured to open whenever a pressure applied on the passive valve 32 by aqueous liquid coming from the tank 2 exceeds a threshold, and to close otherwise, i.e. whenever a pressure applied on the passive valve by aqueous liquid coming from the tank 2 does not exceed the threshold (in particular, when no pressure is applied on the passive valve by an aqueous liquid coming from the tank 2).

The second valve 32 is a check valve. Thus, the second valve prevents aqueous liquid to flow backwards, i.e. towards the tank whatever the pressure applied on the second valve by aqueous liquid in a backward direction (from the outlet 16 towards the tank 2).

It is to be noted that the respective positions of the two valves 30, 32 in the system 1 can be inverted (valve 30 in bypass line 26 and valve 32 in minerality modifying line 24).

## Removable cartridge

The system 1 further comprises a cartridge 40 constituting a removable part which can be removed from the system 1 and replaced by another cartridge in the system 1. The cartridge 40 comprises at least one purifier of the system 1 and at least one minerality modifying device of the system 1.

In the first embodiment shown in figure 1, the cartridge 40 comprises purifiers 4, 6, 8 and the minerality modifying devices 12, 14.

The cartridge 40 does not comprise the other components of the system 1 described above. In particular, the cartridge 40 does not include the valve assembly (first valve 30 or second valve 32). This is advantageous in that it makes the cartridge 40 cheaper.

The cartridge 40 comprises a first line comprising: a first inlet 42 for inputting a first aqueous liquid into the cartridge 40, a purifier configured to purify the first aqueous liquid without substantially modifying an amount of minerals in the first aqueous liquid, a first outlet 44 for outputting the first aqueous liquid outside the cartridge after the first aqueous liquid has been purified by the purifier.

In fact, the first line comprises purifiers 4, 6, 8. The first line does not comprise the fourth purifier 10. The first outlet 44 is arranged downstream the third purifier 8 and upstream the fourth purifier 10. In other embodiments, the cartridge could comprise fewer purifiers (two or one among purifiers 4, 6, 8).

The cartridge 40 further comprises a second line separated from the first line. This means that there is no fluidic connection between the first line and the second line within the cartridge (however, we will see later that such fluidic connection may exist outside the cartridge, in the system 1).

The second line comprises: a second inlet 46 for inputting a second aqueous liquid into the cartridge 40, a minerality modifying device configured to substantially modify an amount of minerals in the second aqueous liquid, and a second outlet 48 for outputting the aqueous liquid outside the cartridge after the second aqueous liquid has been treated by the minerality modifying device.

More precisely, the second line includes the demineralizer 12 and the mineralizer 14. In other embodiments, a single minerality modifying device could be included in the second line (either the demineralizer 12 or mineralizer 14).

When the cartridge is placed in the system 1, the first line forms a portion of the dispense line 28, while the second line forms a portion of the minerality modifying line 24. The first inlet is arranged downstream the junction section 27. The second inlet is arranged downstream the splitting section 23 and upstream the demineralizer 12. The second outlet is arranged upstream the junction section 27 and downstream the mineralizer 14.

**Other components**

The system 1 further comprises a sensing system 50 configured to sense a physical property of an aqueous liquid flowing in the system 1. The physical property is related to the amount of minerals of the aqueous liquid. In other words, a change in the amount of minerals in the aqueous liquid will cause a change of the physical property sensed by the sensing system 50.

In particular, the sensing system is able to sense a first value of a physical property of an aqueous liquid as not processed by any of the minerality modifying devices 12, 14 of the system 1, and to sense a second value of the physical property of the aqueous liquid once the aqueous liquid has been processed by the minerality modifying devices 12, 14. The first value and the second value of the physical property should be different when the minerality modifying devices work properly.

In a preferred embodiment that will be detailed below, the physical property is the conductivity of the aqueous liquid. However, other physical properties may be sensed by the sensing system 50 in replacement of the conductivity, such as a conductance or a resistivity of the aqueous liquid.

In the first embodiment shown in figure 1, the sensing system is a single sensor arranged downstream the minerality modifying devices 12, 14. More precisely, the sensor 50 is arranged to sense the physical property of aqueous liquid flowing in the dispense line 28.

The system 1 may further comprises a carbonator 60 configured to carbonate the aqueous liquid reaching the outlet 16. The carbonator 60 may comprise a carbonation source storing carbon dioxide and a carbonation valve controlling an amount of carbon dioxide stored in the carbonation tank to be mixed with aqueous liquid dispensed to a user via the outlet 16. The carbonator 60 may further comprise a carbon dioxide vent/-drain and/or an air vent/drain designed to reduce pressure in a container mechanically coupled with the outlet 16, and corresponding valves for controlling the vents or drains. The carbonator 60 may further comprise means for preventing back pressure into upstream parts of the circuit 18. Said means comprise for example a one-way valve between the UV and carbonator 60.

In an embodiment, the carbonator 60 is configured to carbonate the aqueous liquid flowing in the dispense line 28, before reaching the outlet 16. In another embodiment, the carbonator 60 is configured to carbonate an aqueous liquid stored in a container, after the aqueous liquid has reached the outlet 16. To that end, the carbonator 60 injects carbon dioxide in the dispense line 28 such that the carbon dioxide reaches the outlet 16 then the container in which the aqueous liquid has been collected.

The system 1 further comprises a user interface 54 allowing a user to interact with the system 1. In particular, the user interface is able to detect that the user requests some of the aqueous liquid present in the system 1.

The system 1 further comprises a controller 56 configured to receive data from the sensor 50 and from the user interface 54. The controller 56 is further configured to control the valve assembly (active valve 30) and the pump 20. The controller 56 comprises or is coupled to a memory able to store data, including data computed by the controller 56 and data sensed by the sensing system 50. In figure 1, communication lines between the controller and the sensor 50, the pump 20, and valve 30 are represented by dashed lines.

**3) Detailed description of the cartridge (first embodiment)**

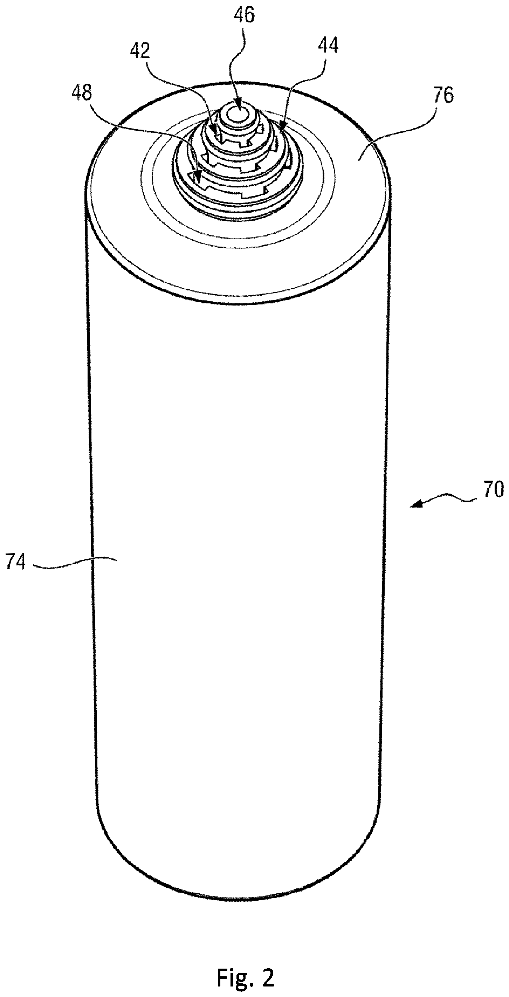

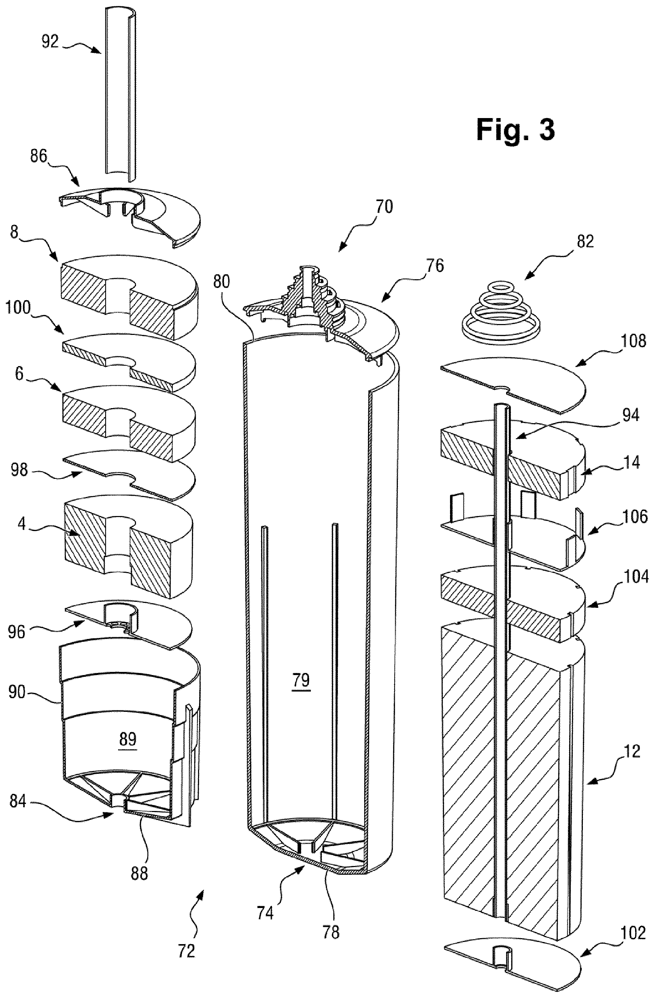

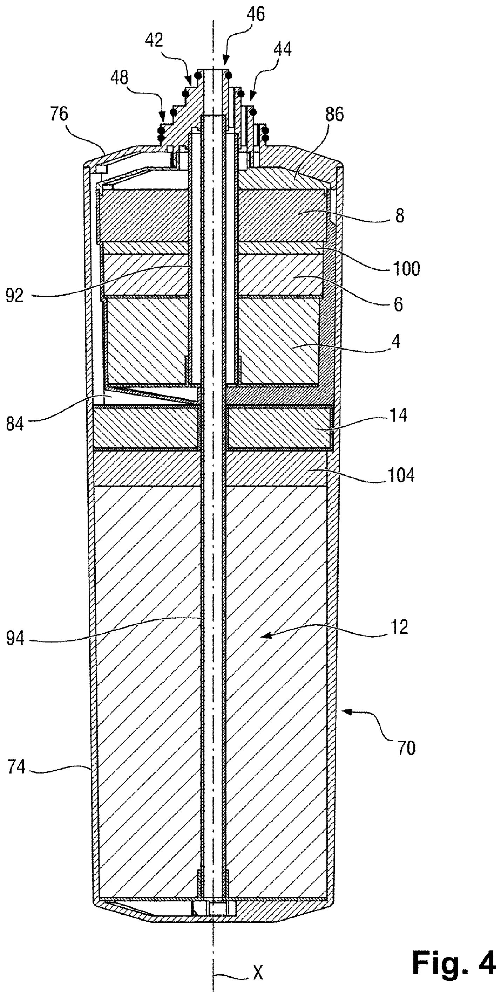

Functional features of the cartridge 40 have been discussed above. Further features of an embodiment of the cartridge 40 will now be detailed in relation with figures 2-6.

The cartridge 40 extending along a longitudinal axis X from a first end of the cartridge 40 to a second end of the cartridge 40. The first end is a top of the cartridge 40 and the second end is a bottom of the cartridge 40. The top is located above the bottom when the cartridge 40 is plugged in the system 1 while the system 1 is in a functional position ready to be used by a user.

Two particular directions in the cartridge 40 will be discussed hereinafter: a first direction parallel to the longitudinal axis X and running from the top to the bottom, and a second direction parallel longitudinal axis X and running from the bottom to the top, opposite to the first direction. Hereinafter the first direction will be referred to as "downward direction" and the second direction will be referred to as "upward direction".

The cartridge 40 comprises a casing 70 for storing various components of the cartridge 40, (including the minerality modifying devices 12, 14 and purifiers 4, 6, 8). Furthermore, the casing 70 defines the first inlet 42, the first outlet 44, the second inlet 46 and the second outlet 48.

The casing 70 comprises an outer part, the outer part comprising an outer casing 74 and outer cap 76.

The outer casing 74 delimits an outer cavity 79 for storing components of the cartridge 40 (which will be detailed later) and further delimits an outer top opening forming an access to the outer cavity 79 from outside the outer casing 74.

The outer casing 74 comprises an outer base wall 78 and an outer lateral wall 80 connected to the outer base wall 78. The outer base wall 78 extends in a transversal direction perpendicular to the longitudinal axis X. The outer base wall 78 has a substantially circular cross section. The outer lateral wall 80 extends in a longitudinal direction parallel to the longitudinal axis X. The outer lateral wall 80 extends about the longitudinal axis X. The outer lateral wall 80 may be cylindrical. The outer base wall 78 and the outer lateral wall 80 delimit together the outer cavity 79. Further, the outer lateral wall 80 delimits the outer top opening. The top opening is opposite to the outer base wall 78 relative to the outer cavity 79.

The outer cap 76 is configured to be coupled to the outer casing 74 in order to cover the outer top opening thereof. When the outer cap 76 is coupled to the outer casing 74, the outer cavity 79 extends between the outer base wall 78 and the outer cap 76.

The outer bottom wall 78 delimits the bottom of the cartridge 40, and the outer cap 76 delimits the top of the cartridge 40.

The first inlet 42, the first outlet 44, the second inlet 46 and the second outlet 48 are four openings formed in the outer cap 76.

Said four openings 42, 44, 46, 48 are coaxial and centered on the longitudinal axis X

The first inlet 42 and the first outlet 44 are arranged such that an aqueous liquid enters in the cartridge 40 through the first inlet 42 by flowing in the downward direction, then exits the cartridge through the first outlet 44 by flowing in the upward direction. Besides, the second inlet 46 and the second outlet 48 are arranged such that an aqueous liquid enters in the cartridge 40 through the second inlet 46 by flowing in the downward direction, then exits the cartridge through the second outlet 48 by flowing in the upward direction.

One of said four openings 42, 44, 46, 48 is a central opening, and the three other openings are annular opening extending about the central opening. This arrangement is advantageous, since the cartridge can be more easily plugged in an external system (in particular the system 1). In the embodiment shown in figures 2-6, the central opening is the second inlet 46. The first inlet 42 is an annular opening extending about the second inlet 46. The first outlet 44 is another annular opening extending about the second inlet 42. The second outlet 48 is a further annular opening extending about the second outlet 44.

The outer cap 76 further comprises at least one O-ring seal 82 extending about at least one of the four openings 42, 44, 46, 48. The embodiment shown in figures 2-6 comprises four O-ring seals 82, respectively extending about the four openings 42, 44, 46, 48.

The outer cap 76 forms a first connector configured to be mechanically coupled to a second connector of the system 1 (not shown). The first connector may be a female connector and the second connector may be a male connector. When the first connector and the second connector are coupled, the first line and the second line are fluidically connected to the other components of the system 1. The O-rings ensure that the four openings are fluidically separated at the junction formed by the first connector and the second connector.

The casing 70 further comprises an inner part stored in the outer cavity 79 (delimited by the outer casing 74). The inner part can be separated from the outer part by removing the outer cap 76 then moving the inner part out of the outer cavity 79 through the outer top opening. Conversely, the inner part can be inserted in the outer cavity 79 through the outer top opening.

The inner part comprises an inner casing 84 and an inner cap 86.

The inner casing 84 delimits an outer cavity 89 for storing components of the cartridge 40 (which will be detailed later) and further delimits an inner top opening forming an access to the inner cavity 89 from outside the inner casing 84.

The inner casing 84 comprises an inner base wall 88 and an inner lateral wall 90 connected to the inner base wall 88. The inner base wall 88 extends in a transversal direction perpendicular to the longitudinal axis X. The inner base wall 88 has a substantially circular cross section. The inner lateral wall 90 extends in a longitudinal direction parallel to the longitudinal axis X. The inner lateral wall 90 extends about the longitudinal axis X. The inner lateral wall 90 is cylindrical. The inner base wall 88 and the inner lateral wall 90 delimit together the inner cavity 89. Further, the lateral wall delimits the inner top opening. The top opening is opposite to the inner base wall 88 relative to the inner cavity 89.

The inner cap 86 is configured to be coupled to the inner casing 84 in order to cover the inner top opening thereof. When the inner cap 86 is coupled to the inner casing 84, the inner cavity 89 extends between the inner base wall 88 and the inner cap 86.

The inner casing 84 and the inner base wall 88 have an external diameter (measured in a transverse direction perpendicular to the longitudinal axis X) which is smaller than the internal diameter of the outer casing 74. As a consequence, an annular gap is left between the outer lateral wall 80 and the inner lateral wall 90.

Besides, the inner part has a height (measured along the longitudinal axis X when the inner casing 84 and the inner base are coupled together) which is smaller than the height of the outer cavity 79 (measured from the outer base to the outer cap 76). As a consequence, the inner part merely occupies a middle portion of the outer cavity 79 and a gap is left between the outer cap 76 and the inner cap 86 at the top of the outer cavity 79. We will see in the following that a bottom portion of the outer cavity 79 is occupied by other components of the cartridge 40.

The inner base wall 88 has an inner base opening and the inner cap 86 delimited an inner cap 86 opening. The inner base opening and the inner cap 86 opening are coaxial. The inner base opening and the inner cap 86 are coaxial and centered on longitudinal axis X.

The inner cavity 89 delimited by the inner casing 84 is actually a first compartment 89 of the cartridge 40 storing components which are part of the first line of the cartridge 40 described above in relation with figure 1.

Besides, the lower portion of the outer cavity 79, which extends between the outer base and the inner part, is a second compartment of the cartridge 40 storing components of the second line described above. By convention, reference numeral 79 of the outer cavity will be used hereinafter to designate the second compartment.

The first compartment 89 and the second compartment 79 are separated from each other by the inner base wall 88.

The cartridge 40 further comprises a first pipe 92. The first pipe 92 is part of the first line. The first pipe 92 is configured to convey a first aqueous liquid from the first inlet 42 to the first compartment 89. More precisely, the first pipe 92 is rectilinear in that it conveys the first aqueous liquid in the downward direction.

From a structural perspective, the first pipe 92 extends in the downward direction from the outer cap 76 to the inner base wall 88. The first pipe 92 extends through the inner cap 86 opening. The first pipe 92 further crosses in the first compartment 89. The first pipe 92 extends about the longitudinal axis X. The first pipe 92 may be a tube (i.e. a pipe having a circular cross section). The first pipe 92 has at least one outlet opening in the first compartment 89. Therefor each outlet is closer to the inner base wall 88 than to the inner cap 86. Any first aqueous liquid coming from the first pipe 92 and entering in the first compartment 89 is constrained to flow in the first compartment 89 in the upward direction towards the inner cap opening. The inner cap opening has a diameter which is larger than the external diameter of first pipe 92, such that an annular portion of the inner cap opening is not occupied by the first pipe 92. This annular portion is fluidically connected to the first outlet of the cartridge 40. Thus, a first aqueous liquid flowing in the first compartment 89 in the upward direction then exits the first compartment 89 by flowing through said annular portion of the inner cap opening, before reaching the first outlet 44.

The cartridge 40 further comprises a second pipe 94. The second pipe 94 is part of the second line. The second pipe 94 is configured to convey a second aqueous liquid from the second inlet 46 to the second compartment 79.

From a structural perspective, the second pipe 94 extends in the downward direction from the outer cap 76 towards the outer base wall 78. The second pipe 94 extends through the inner part (through the inner cap 86 opening, through the inner cavity 89 and through the inner base opening). The second pipe 94 may contact the outer base wall 78. The second pipe 94 extends about the longitudinal axis X. The second pipe 94 may be a tube (a pipe having a circular cross section). The second pipe 94 has at least one lateral outlet opening in the second compartment 79. The or each lateral outlet is closer to the outer base than to the inner cap 86. Any second aqueous liquid coming from the second pipe 94 and entering in the second compartment 79 is constrained to flow in the second compartment 79 in the upward direction. The annular gap left between the outer casing 74 and the inner casing 84 fluidically connects the second compartment 79 to the second outlet of the cartridge 40. Thus, a second aqueous liquid flowing in the second compartment 79 in the upward direction then flows through said annular gap, before reaching the second outlet 48.

The second pipe 94 has a length, measured parallel to the longitudinal axis X, which is greater that the length of the first pipe 92. The second pipe 94 has a cross section which is smaller than the cross section of the first pipe 92.

In fact, the second pipe 94 is an inner pipe, and the first pipe 92 is an outer pipe extending about the inner pipe. The first pipe 92 and the second pipe 94 are coaxial. Arranging the first pipe 92 about the second pipe contributes to make the cartridge 40 compact.

In the first compartment 89, the following components are stacked in the upward direction, (from the inner base to the inner cap 86):

- a first separator 96,
- the first purifier 4 (GAC),
- a second separator 98,
- the second purifier 6 (HMIX),
- a fleece 100,
- the third purifier 8 (MF).

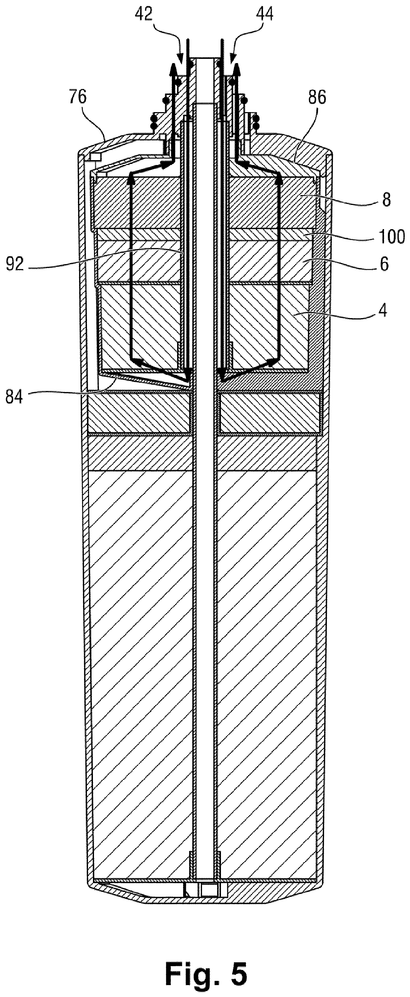

This means that a first aqueous liquid flowing in the first compartment 89 sequentially passes through the components listed above, by order of presentation (the first separator 96 first, the third purifier 8 last), as shown in figure 5.

Said stacked components (especially the purifiers 4, 6, 8) extend about the first pipe 92. This arrangement allows a more uniform distribution in the first compartment of a first aqueous liquid supplied by the first pipe 92.

The separators 96, 98 are perforated plates allowing a good distribution of the water flowing inside the compartment 89. The fleece 100 principally keeps the bed in place and can handle bed expansion.

In the second compartment 79, the following components are stacked in the upward direction, from the outer base wall 78 to the inner base wall 88:

- a fourth separator 102,
- the demineralizer 12,
- a fleece 104,
- a fifth separator 106,
- the mineralizer 14 (which is a solid mineralizer),
- a sixth separator 108.

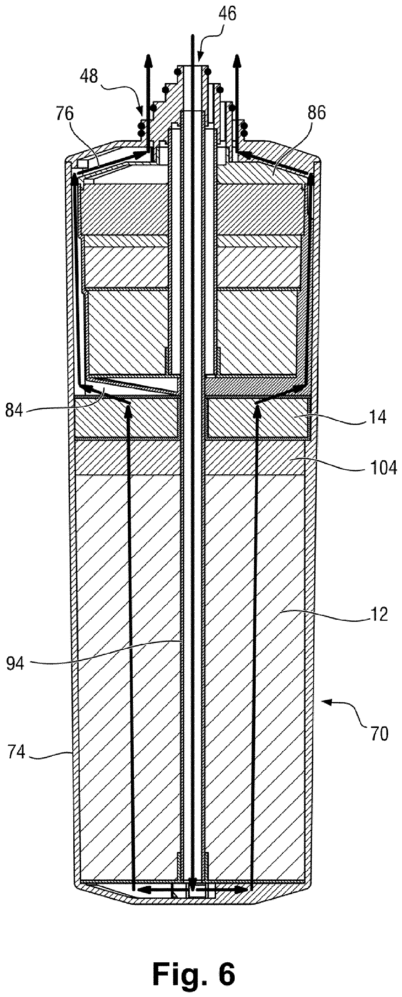

This means that a second aqueous liquid flowing in the second compartment 79 sequentially passes through the components listed above, by order of presentation (the fourth separator 102 first, the sixth separator 108 last), as shown in figure 6.

Said stacked components (especially the minerality modifying devices 12, 14) extend about the second pipe 94. This arrangement allows a more uniform distribution in the second compartment of a second aqueous liquid supplied by the first pipe 94.

The separators 102, 106 are perforated plates allowing a good distribution of the water flowing inside the second compartment 79. The fleece 100 principally keeps the bed in place and can handle bed expansion.

As explained before, in the cartridge 40, each purifier 4, 6, 8 is arranged such that a first aqueous liquid has to flow through the purifier in a direction (the upward direction), and each minerality modifying device is arranged such that a second aqueous liquid flows through the minerality modifying device in the very same direction. This arrangement is advantageous in that the cartridge 40 can be placed in a position preventing bubbles to be trapped in the purifiers and in the demineralizer at the same time.

As explained above, the outer part and the inner part of the casing 70 can be separated from each other. In other words, the first compartment 89 and the second compartment 79 can be separated. This is advantageous, because when the cartridge 40 is removed from the system 1, it is possible to replace components stored in only one of the two compartments 79, 89. This arrangement is environmentally friendly, because it avoids having to throw away a cartridge 40 wherein some components still work.

### 4) Functioning modes of the circuit

A function performed by the circuit 18 is controlling the circulation of an aqueous liquid from the tank 2 to the outlet 16.

The circuit 18 is configurable in different modes implementing different interconnections between some of the components listed above.

### Idle mode

The circuit 18 is able to be set in an idle mode wherein the aqueous liquid stagnates at least in the tank 2. The aqueous liquid is prevented by the circuit 18 to reach the outlet 16.

The idle mode is obtained as follows: the active valve 30 is closed and the pump 20 is turned off by the controller 56.

### Bypass mode

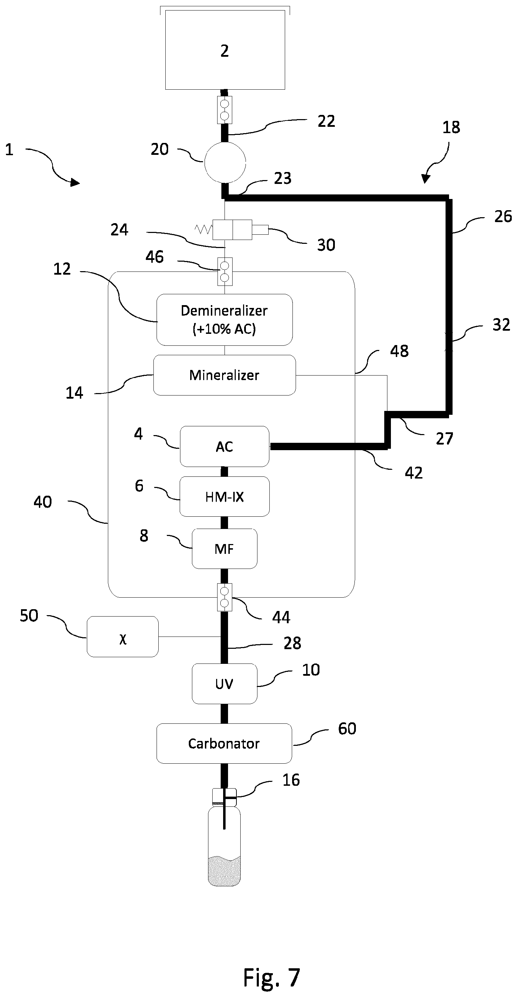

The circuit 18 is able to be set in a bypass mode wherein the circuit forms a first path fluidically connecting the tank 2 to the outlet 16 and bypassing the minerality modifying devices, and wherein the circuit 18 circulates the aqueous liquid in the first path such that the aqueous liquid is not processed by any minerality modifying device of the system 1 before reaching the outlet 16 (and exiting the system 1). The first path is shown in figure 7 by a bold line.

The bypass mode is obtained as follows: the active valve 30 is closed and the pump 20 is turned on by the controller 56.

The first path is actually formed by the input line 22, the bypass line 26 and the dispense line 28. Thus, the first line of the cartridge 40 is included in the first path.

When set in the bypass mode, the circuit 18 circulates some of the aqueous liquid stored in the tank 2 to the outlet 16 at a first flowrate. The aqueous liquid flows in the input line 22, then in the bypass line 26, then in the dispense line 28. The check valve 32 opens because of the pressure applied thereon by the aqueous liquid. This is due to the fact that the minerality modifying line 24 is closed by the active valve 30. The first flowrate is constant in the first path.

While the circuit 18 is in the bypass mode, the aqueous liquid flows through the following components, in that order before reaching the outlet 16: the first line of the cartridge (the first inlet 42, the first purifier 4, the second purifier 6, the third purifier 8, the first outlet 44), the fourth purifier 10, and the carbonator 60. The aqueous liquid bypasses the second line of the cartridge (the minerality modifying devices 12, 14); therefore, the minerality of the aqueous liquid is not substantially modified by the system 1.

The aqueous liquid passes through the first line of the cartridge as follows. The aqueous liquid enters the cartridge by the first inlet 42, then flows in the first pipe 92 in the downward direction, then reaches the first compartment 89. Then, the aqueous flows in the first compartment 89 in the upward direction. The aqueous liquid is treated by the first purifier 4, then by the second purifier 6, then by the third purifier 8. Then, the aqueous liquid flows through the annular gap left between the inner casing 84 and the outer casing 74, then reaches the first outlet 44 of the cartridge, as shown in figure 5.

### Processing mode

The circuit 18 is able to be set in a processing mode wherein the circuit forms a second path fluidically connecting the tank 2 to the outlet 16 and passing through the minerality modifying devices 12, 14, and wherein the circuit 18 circulates the aqueous liquid in the second path such that the aqueous liquid is processed by the minerality modifying devices 12, 14 before reaching the outlet 16.

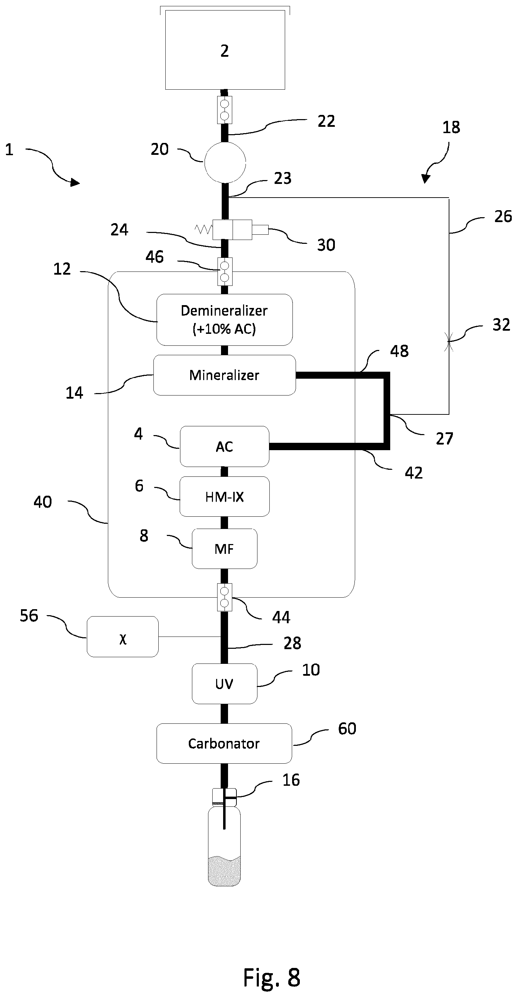

The second path is shown in **figure 8** by a bold line.

The processing mode is obtained as follows the active valve 30 is open and the pump 20 is turned on by the controller 56.

The second path closed loop is actually formed by the input line 22, the minerality modifying line 24 and the dispense line 28.

When the circuit 18 is set in the processing mode, some of the aqueous liquid stored in the tank 2 flows through the input line 22, then through the minerality processing line 24, then through the dispense line 28 at a second flowrate. Since the active valve 30 is open, the aqueous liquid is free to flow in the bypass line. A pressure applied by the aqueous liquid coming from the tank 2 on the check valve 32 is low, thus the check valve 32 remains closed. The second flowrate is constant in the second path because the bypass line 26 remains closed by the check valve 32.

When the circuit 18 is set in the processing mode, the aqueous liquid flows through the following components, in that order before reaching the outlet 16: the second line of the cartridge 40, the junction section 27, the first line of the cartridge 40 (the first purifier 4, the second purifier 6, the third purifier 8), the fourth purifier 10, and the carbonator 60. When the aqueous liquid passes through the minerality modifying devices 12, 14, the minerality of the aqueous liquid is substantially modified. In particular, the conductivity of the aqueous liquid is substantially modified. The amount of minerals of the aqueous liquid flowing in the second path is decreased by the demineralizer 12, then increased by the mineralizer 14.

The aqueous liquid passes through the first line of the cartridge 40 like in the bypass mode.

Besides, the aqueous liquid passes through the second line of the cartridge 40 as follows. The aqueous liquid passes through the second inlet 46, then flows in the second pipe 94 in the downward direction, then reaches the second compartment 79. Then, the aqueous flows in the second compartment 79 in the upward direction. The aqueous liquid is treated by the demineralizer 12, then treated by the mineralizer 14. Then, the aqueous liquid flows through the annular portion of the inner cap 86 opening left by the second pipe 94, then reaches the second outlet 48 of the cartridge 40.

## 5) Methods performed by the "single pass" system

### Rinsing method

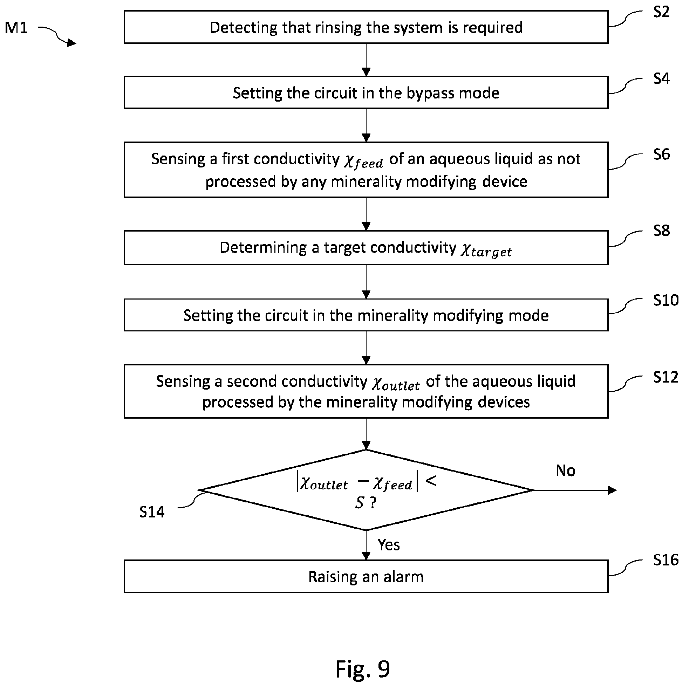

Referring to **figure 9,** a rinsing method M1 performed by the system 1 comprises the following steps.

It is supposed that the tank 2 has been filled with a volume of aqueous liquid, for example 2 L of tap water. Besides, a container such as a decanter has been placed by a user at the outlet 16 (as shown in figure 1).

In a step S2, the controller 56 detects that the system 1 has to be rinsed. For that purpose, the controller 56 may detect at least one of the following events: the system 1 has been powered on, a new cartridge 40 has been installed in the system 1, the tank 2 has been removed then placed back in the system 1, and/or a user has requested a rinsing by means of the user interface.

In a step S4, the controller 56 sets the circuit 18 in the bypass mode by sending appropriate commands to the pump 20 and to the valve assembly (active valve 30). The controller 56 causes the pump 20 to circulate in the first path (shown in figure 7) a small volume of the aqueous liquid stored in the tank 2, for instance 0.1 L.

While the circuit 18 is in the bypass mode, the sensing system 50 senses a first conductivity $\chi_{feed}$ of the aqueous liquid flowing in the first path (step S6). The first conductivity is therefore the conductivity of the aqueous liquid as not processed by any of the minerality modifying devices 12, 14 of the system 1. The sensor 50 sends the first conductivity to the controller 56.

In a step S8, the controller 56 determines a target conductivity $\chi_{target}$.

In an embodiment, the controller 56 computes the target conductivity $\chi_{target}$ at step S8 from the first conductivity $\chi_{feed}$. For example, the target conductivity may be computed as the first conductivity $\chi_{feed}$ multiplied by a predefined coefficient lower than 1. For example, when this predefined coefficient is 0.5, the target conductivity $\chi_{target}$ is 50% of the first conductivity $\chi_{feed}$. In another embodiment, the target conductivity $\chi_{target}$ is known in advance and stored in a memory of the system 1. In this case the controller 56 merely loads the target conductivity $\chi_{target}$ from the memory.

In a step S10, the controller 56 sets the circuit 18 in the processing mode by sending appropriate commands to the pump 20 and to the valve assembly. The controller 56 causes the pump 20 to circulate in the second path another volume of the aqueous liquid stored in the tank 2. This volume of aqueous liquid is adapted to ensure that the minerality modifying devices 12, 14 are flushed.

While the circuit 18 is in the processing mode, the sensing system 50 senses a second conductivity $\chi_{outlet}$ of the aqueous liquid flowing in second first path (step S12). The second conductivity $\chi_{outlet}$ is the conductivity of the aqueous liquid as processed by the minerality modifying devices 12, 14 of the system 1. The sensor 50 sends the second conductivity to the controller 56.

During step S12, the sensing system 50 may actually sense a sequence of conductivity values of the aqueous liquid flowing in the second path, and select a value of the sequence as the second conductivity value only if said value is close enough to a preceding value or to a next value of the sequence. In other words, the sensing system 50 waits for the conductivity of the aqueous liquid flowing in the second path to become stable. The sensor 50 sends the second conductivity to the controller 56.

In a step S14, the controller 56 compares the first conductivity and the second conductivity. If a gap between the first conductivity and the second conductivity is below a predefined threshold S, then the controller 56 raises an alarm. In fact, this situation reveals that the minerality modifying devices 12, 14 are not working properly. The alarm may be sent to the user interface, such that the user is notified. The user may be invited to replace the cartridge 40 installed in the system 1 by a brand new one, by means of an appropriate message displayed by the user interface.

## Dispensing methods performed by the "single pass" system

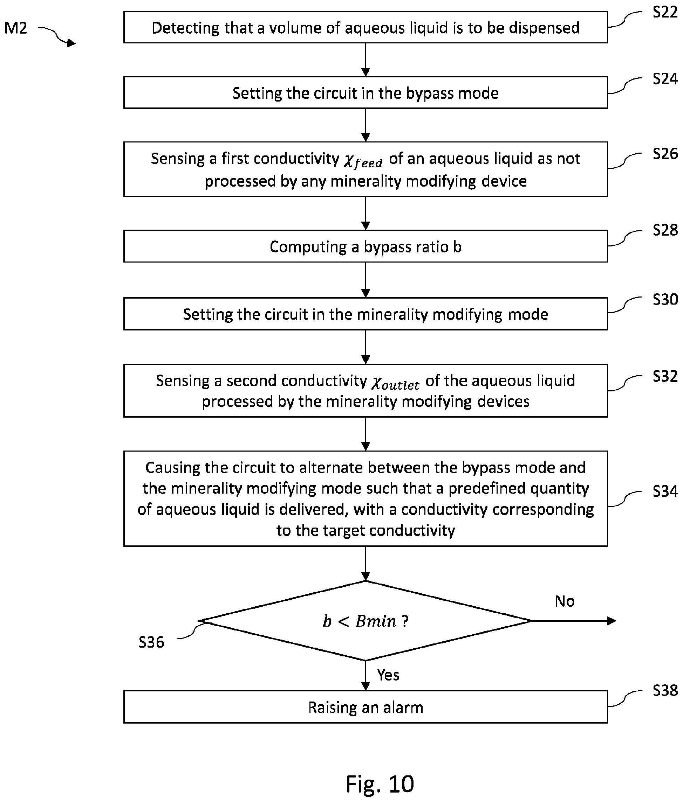

Now turning to **figure 10,** a method M2 of dispensing an aqueous liquid to a user according to a first embodiment comprises the following steps performed by system 1.

It is supposed that the tank 2 has been filled with a volume of aqueous liquid, for example 2 L of tap water. Besides, a container such as a decanter has been placed by a user downstream the outlet 16 (as shown in figure 1).

In a step S22, the controller 56 detects that a predefined volume of the aqueous liquid stored in the tank has to be dispensed to a user. In practice, the controller 56 may detect that a user has requested this by means of the user interface 54. The predefined volume may be selected by the user or set by the controller 56.

In a step S24, the controller 56 sets the circuit 18 in the bypass mode by sending appropriate commands to the pump 20 and to the valve assembly (active valve 30). Step S24 is similar to step S4. A small amount of the aqueous liquid stored in the tank 2 flows in the first path, reaches the outlet 16 and is received by the container. This aqueous liquid has not been processed by any of the minerality modifying devices 12, 14 since it does not come from the minerality modifying line 24.

While the circuit 18 is in the bypass mode, the sensing system 50 senses the first conductivity $\chi_{feed}$ of the aqueous liquid flowing in the first path (step S26). Step S26 is similar to step S6. The conductivity value sensed at step S26 is saved in the memory of the controller 56 in replacement of any prior value for $\chi_{feed}$ (in particular any value obtained at step S6).

In a step S28, the controller 56 computes a bypass ratio b from the first conductivity $\chi_{feed}$ and the second conductivity $\chi_{outlet}$ which are stored in the memory thereof. The bypass ratio b is computed by the controller 56 as follows:

$$b = \frac{\chi_{target} - \chi_{outlet}}{\chi_{feed} - \chi_{outlet}}$$

The bypass ratio b is saved in the memory of the controller 56.

In a step S30, the controller 56 sets the circuit 18 in the processing mode by sending appropriate commands to the pump 20 and to the valve assembly. Step S30 is similar to step S10.

While the circuit 18 is in the processing mode, the sensing system 50 senses a second conductivity $\chi_{outlet}$ of the aqueous liquid flowing in second path (step S32). The second conductivity $\chi_{outlet}$ is the conductivity of the aqueous liquid as processed by the minerality modifying devices 12, 14 of the system 1. The sensing system 50 sends the second conductivity to the controller 56, and replaces any prior value of $\chi_{outlet}$ in the memory of the controller 56. In other words, the conductivity $\chi_{outlet}$ in the memory is updated with the value sensed at step S32.

Then, at step S34, the controller 56 may cause the circuit 18 to alternate between the bypass mode and the processing mode until the predefined volume of aqueous liquid reaches the outlet and is received in the container. The controller 56 takes into account the volumes of aqueous liquid already delivered at steps S22 and S30. Once this volume has been delivered, the controller 56 sets the circuit 18 in the idle mode.

The predefined volume reaching the outlet 16 during steps S22, S30 and S34 consists of:

- a first volume of aqueous liquid which flowed in the first path (while the circuit was in the bypass mode). This first volume was not processed by any of the minerality modifying devices 12, 14.

- a second volume of aqueous liquid which flowed in the second path (while the circuit was in the processing mode). This second volume was processed by the minerality modifying devices 12, 14.

It is to be noted that the controller 56 causes the circuit 18 to alternate between the bypass mode and the processing mode such that the predefined volume of the aqueous liquid which is delivered and received in the contained has an average conductivity corresponding to the target conductivity.

To fulfil this condition, the controller 56 ensures that the first volume is proportional to b (the first volume includes the volume delivered at step S22), and that the second volume is proportional to 1-b (the second volume includes the volume delivered at step S30).

In a variant, the controller 56 computes the following durations before step S34:

- a first duration during which the circuit is to be kept in the bypass mode, so as to deliver the first volume; and

- a second duration during which the circuit is to be kept in the processing mode, so as to deliver the second volume.

The first duration and the second duration may be computed by the controller 56 from the following data: the bypass ratio b, the first flowrate (flowrate of the aqueous liquid flowing in the first path while the circuit is in the bypass mode) and the second flowrate (flowrate of the aqueous liquid flowing in the second path while the circuit is set in the processing mode). When the first flowrate and the second flowrate are equal, the first duration is proportional to b, and the second duration is proportional to 1-b.

It is to be noted that the circuit spends time in the bypass mode at step S22, and spends time in the processing mode at step S30.

Thus, at step S34, the controller 56 maintains the circuit in the bypass for a duration equal to the first duration minus the duration spent in the bypass mode at step S22, and maintains the circuit 18 in the processing mode for a duration equal to the second duration minus the duration spent in the processing mode at step S30.

The condition above-mentioned (i.e. the average conductivity of the delivered predefined volume of aqueous liquid should correspond to the target conductivity) can be fulfilled differently in other variants of method M2. Rather than computing durations in advance, the controller 56 may sense the first volume and the second volume using a sensor included in the system 1, for example a flowrate sensor. In a variant, the controller 56 keeps the circuit in the bypass mode until it is sensed that the volume of the first volume has reached the outlet 16, and keeps the circuit in the processing mode until it is sensed that the volume of the second volume has reached the outlet 16.

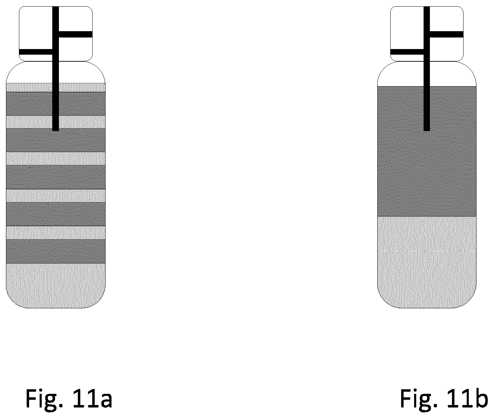

In method M2, the first volume is divided into N first sub-volumes and the second volume is divided into M second sub-volumes, the N first sub-volumes and the M second sub-volumes being delivered by the circuit alternately during distinct time intervals. M or N is at least equal to 2, and M and N are equal or differ by one. To implement this strategy, the controller 56 switches the circuit 18 multiple times between the bypass mode and the processing mode. As a matter of fact, method M2 as shown in figure 10 uses this strategy, since method M2 comprises not only step S34 but also steps S22 and S24. This strategy is illustrated in **figure 11a** showing an example wherein N=6 and M=5. In figure 11a, the first volume (aqueous liquid not processed by any minerality modifying device of the system 1) is represented by six layers colored in light gray. This illustrates that N first sub-volumes are delivered by the circuit during N first time intervals (N=6). The second volume (aqueous liquid processed by the minerality modifying devices of the system 1) is represented by five layers colored in dark gray. This illustrates that M second sub-volumes are delivered by the circuit during M second time intervals interleaved with the first time intervals (M=5).

In summary, the circuit 18 is selectively set by the controller 56 in the processing mode and in the bypass mode multiple times on the basis of the first conductivity, the second conductivity and a target conductivity during method M2, such that the predefined volume of the aqueous liquid stored in the tank reaches the outlet 16, and such that the predefined volume has an average conductivity corresponding to the target conductivity.

The controller 56 preferably alternates between said modes using a frequency adapted to ensure that a previous volume is flushed, thereby allowing the conductivity to be sensed to be stable.

The method M2 further comprises a step S36 wherein the controller compares the computed bypass ratio b with a predefined threshold Bmin. If the bypass ratio b is below the predefined threshold Bmin, then the controller may raise an alarm (step S38). Of course, steps S36, S38 may be performed right after the computation of the bypass ratio at step S28.

The method M2 is particularly advantageous in that it ensures that the aqueous liquid dispensed to the user has a desired taste (reflected by the target conductivity) during the entire lifetime of the minerality modifying devices 12, 14, especially the demineralizer 12. For example, a resin used by the demineralizer 12 can get exhausted, causing the second conductivity to vary over time.

In a method according to a second embodiment, the controller 56 causes the first volume to be delivered by the circuit 18 during a first continuous time period having the first duration, and the second volume to be delivered by the circuit 18 during a second continuous time period having the second duration (M=1, N=1). In this embodiment, the controller 56 changes the mode of the circuit only once. To implement this strategy, step S34 may not be performed. This strategy is illustrated in **figure 11b**. In figure 11b, the first volume (aqueous liquid not processed by any minerality modifying device of the system 1) and the second volume (aqueous liquid processed by the minerality modifying devices of the system 1) are represented by two different layers in the container, with the second volume above the first part.

In this second embodiment, the circuit 18 is selectively set by the controller 56 once in the processing mode and once in the bypass mode on the basis of the first conductivity, the second conductivity and a target conductivity, such that the predefined volume of the aqueous liquid stored in the tank reaches the outlet 16, and such that the predefined volume has an average conductivity corresponding to the target conductivity.

The methods M1, M2 described above are not limited to embodiments wherein conductivities are sensed by the sensing system 50. Said methods can be generalized to any of the physical properties discussed above related to the amount of minerals in the aqueous liquid.

## 7) "Looping" system

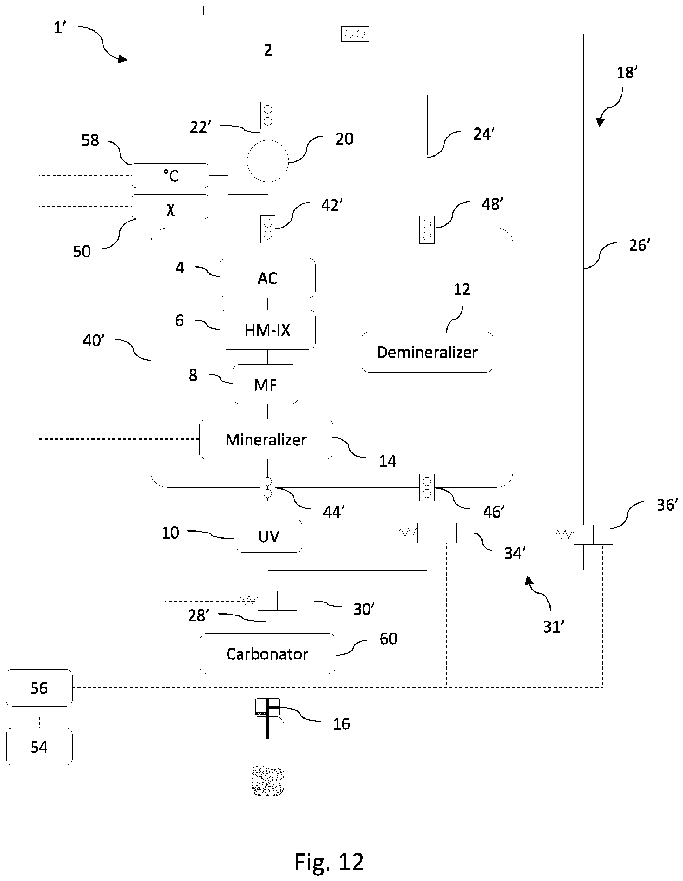

A system 1' according to a second embodiment is shown in **figure 12.** The system 1' has numerous components in common with system 1 (designated by the same reference numerals), including components 2, 4, 6, 8, 10, 12, 14, 16, 20, 50, 54, 56, 60.

The system 1 further comprises a circuit 18' fluidically interconnecting 2, 4, 6, 8, 10, 12, 14, 16, 20, 50, 60.

## Minerality modifying devices

Like in system 1, the mineralizer 14 can either be a solid mineralizer or a liquid mineralizer.

In the following, it is detailed an embodiment in which the mineralizer 14 is of liquid type, provided that this liquid mineralizer can be replaced by a solid mineralizer.

## Circuit

The circuit 18' differs from the circuit 18 by its working modes and the way it interconnects the components.

The circuit 18' comprises pipes defining a main line 22'. The main line 22' includes the tank 2, the first purifier 4, the second purifier 6, the third purifier 8, the mineralizer 14, the fourth purifier 10 arranged in series, in that order. Fewer purifiers may be included in the main line 22, and their order may be different. Purifiers 4 and 6 can also be mixed. In addition, the pump 20 is included in the main line 22, for example between the tank 2 and the first purifier 4 as shown in figure 1.

The circuit 18' further defines two return lines 24', 26'. The return lines 24', 26' include a minerality modifying line 24' and a bypass line 26'. The tank 2 is arranged in output of each of the two return lines 24', 26'. The minerality modifying line 24' includes the demineralizer 12.

The circuit 18' further defines a dispense line 28'. The dispense line 28' includes the carbonator 60 and the outlet 16 of the system 1.

The circuit 18' further comprises a dispense valve 30' between the main line 22' and the dispense line 28'. The dispense valve 30' is configurable into an open position wherein the main line 22' and the dispense line 28' are fluidically connected by the dispense valve 30', thereby allowing an aqueous liquid flowing in the main line 22' to reach the outlet 16. The dispense valve 30' is also configurable into a closed position which fluidically isolates the dispense line 28' from the main line 22, thereby preventing an aqueous liquid flowing in the main line 22' from reaching the outlet 16. The dispense valve 30' may for instance be a solenoid valve.

The circuit 18' further comprises a valve assembly 31' for selectively redirecting an aqueous liquid flowing in the main line 22' to only one of the two return lines 26, 28 at a time.

More precisely, the valve assembly 31' is configurable into a first position wherein the valve assembly 31' fluidically connects the main line 22' to the minerality modifying line 24', thereby redirects the aqueous liquid in the minerality modifying line 24'. In the first position, the valve assembly 31' further disconnects the bypass line 26' and the output line 28' from the main line 22'. As a consequence, 100% of the aqueous liquid coming from the main line 22' and reaching the valve assembly 31' is redirected in the minerality modifying line 24' whenever the valve assembly 31' is set in the first position.

Furthermore, the valve assembly 31' is configurable into a second position wherein the valve assembly 31' fluidically connects the main line 22' to the bypass line 26' and disconnects the minerality modifying line 24' and the output line 28' from the main line 22'. As a consequence, 100% of the aqueous liquid coming from the main line 22' and reaching the valve assembly 31' is redirected in the bypass line 26' whenever the valve assembly 31' is set in the second position.

The valve assembly 31' is configurable into a third position wherein the valve assembly 31' prevents an aqueous liquid contained in the main line 22' from reaching the return lines 24', 26'.

The valve assembly 31' may comprise two valves 34', 36': a first valve 34' controlling access to the mineral modifying line 24', and a second valve 36' controlling access to the bypass line 26'. Each valve may be for instance a solenoid valve. The first position, the second position and the third position of the valve assembly 31' can be obtained by opening or closing the two valves appropriately.

The circuit 18' may further comprise a vent or a drain configured to reduce a pressure in the main line 22', and a pressure relief valve controlling said pressure reduction.

The system 1' further comprises a cartridge 40' constituting a removable part which can be removed from the system 1 and replaced by another cartridge in the system 1. The cartridge 40' comprises at least one purifier of the system 1 and at least one minerality modifying device.

Like the cartridge 40 of system 1, the cartridge 40' comprises a first line comprising: a first inlet 42' for inputting a first aqueous liquid into the cartridge 40', a purifier configured to purify the first aqueous liquid without substantially modifying an amount of minerals in the first aqueous liquid, a first outlet 44' for outputting the first aqueous liquid outside the cartridge after the first aqueous liquid has been purified by the purifier.

In fact, the first line comprises purifiers 4, 6, 8, and the mineralizer 14. The first line does not comprise the fourth purifier 10. The first outlet 48 is arranged downstream the third purifier 8 and upstream the fourth purifier 10. In other embodiments, the first line could comprise fewer purifiers (two or one among purifiers 4, 6, 8). Furthermore, the mineralizer 14 could be located outside the cartridge 40', thus not be present in cartridge 40'.

The cartridge 40' further comprises a second line separated from the first line. This means that there is no fluidic connection between the first line and the second line within the cartridge 40' (however, we will see later that such fluidic connection may exist outside the cartridge in the system 1').

The second line comprises: a second inlet 46' for inputting a second aqueous liquid into the cartridge 40, a minerality modifying device configured to substantially modify an amount of minerals in the second aqueous liquid, and a second outlet 48' for outputting the second aqueous liquid outside the cartridge after the second aqueous liquid has been treated by the minerality modifying device.

More precisely, the second line of the cartridge 40' includes the demineralizer 12.

When the cartridge is placed in the system 1', the first line forms a portion of the main line 22', while the second line forms a portion of the minerality modifying line 28'. The first inlet 42' is arranged downstream the pump 20. The second inlet 46' is arranged downstream the valve assembly 31' and upstream the demineralizer 12. The second outlet is arranged upstream the tank 2 and downstream the mineralizer 14.

Other components

In the system 1', the sensing system 50 is arranged in the main line, between the tank 2 and the first purifier 4. The temperature sensor 58 is arranged as well in the main line 22.

The controller 56 configured to receive data from the sensor 50 and from the user interface 54. The controller 56 is further configured to control the valve assembly 31', the dispense valve, the pump 20 and the actuator of mineralizer 14, if said mineralizer is of the liquid type described above. The controller 56 comprises or is coupled to a memory able to store data, including data computed by the controller 56 and data sensed by the sensing system 50. In figure 1, communication lines between the controller and the sensor 50, the pump 20, and valves 30', 31' are represented by dashed lines.

## 8) Detailed description of the cartridge (second embodiment)

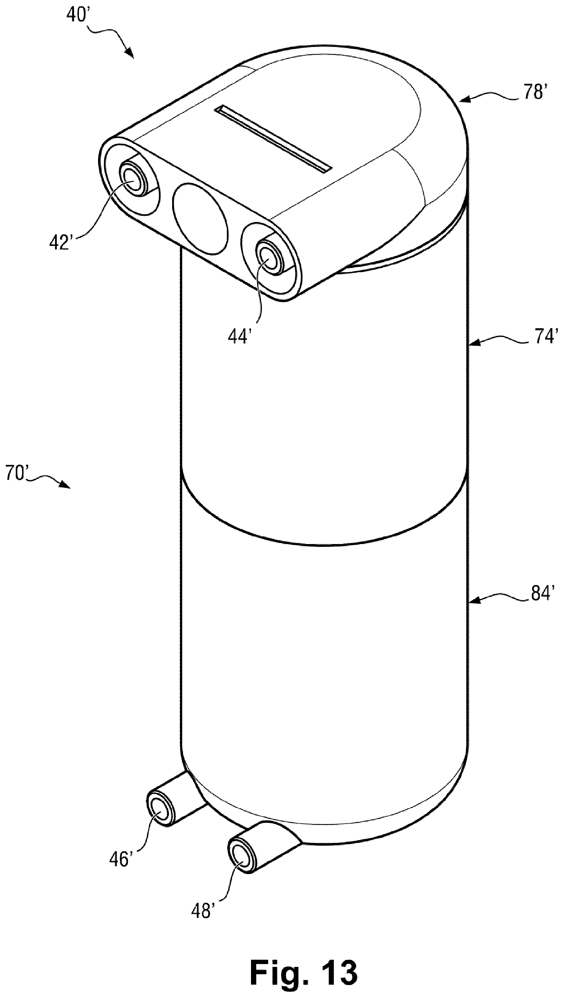

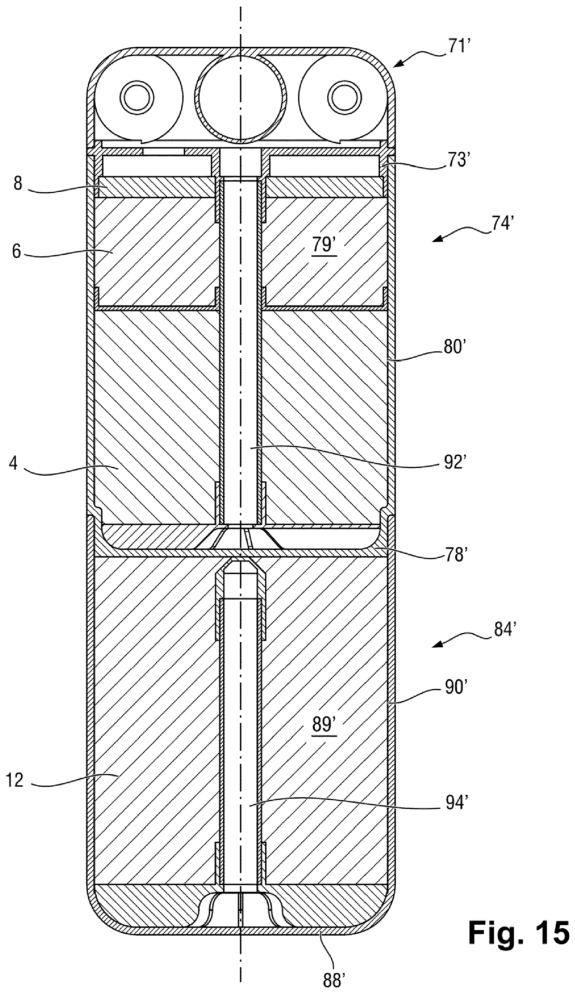

Functional features of the cartridge 40' have been discussed above. Further features of an embodiment of the cartridge 40' will now be detailed in relation with figures 13-16.

The cartridge 40' extending along a longitudinal axis X' from a first end of the cartridge to a second end of the cartridge. The first end is a top of the cartridge and the second end is a bottom of the cartridge. The top is located above the bottom when the cartridge 40' is plugged in the system 1' while the system 1 is in a functional position ready to be used by a user.

Two particular directions in the cartridge 40' will be discussed hereinafter: a first direction parallel to the longitudinal axis X' and running from the top to the bottom, and a second direction parallel longitudinal axis X' and running from the bottom to the top, opposite to the first direction. Hereinafter the first direction will be referred to as "downward direction" and the second direction will be referred to as "upward direction".

The cartridge 40' comprises a casing 70' for storing various components of the cartridge, (including the minerality modifying devices 12, 14 and purifiers 4, 6, 8). Furthermore, the casing 70' defines the first inlet 42', the first outlet 44', the second inlet 46' and the second outlet 48'.

The casing 70' comprise different parts, which are releasably coupled to each other and which can therefore be separated from each other.

The casing 70 comprises a first part 74' (or first casing 74') delimiting a first compartment 79' for storing components of the cartridge 40' (which will be detailed later). The first casing 74' has a first top opening forming an access to the first compartment 79' from outside the first casing 74'.

The first casing 74' comprises a first base wall 78' and a first lateral wall 80' connected to the first base wall 78'. The first base wall 78' extends in a transversal direction perpendicular to the longitudinal axis X'. The first base wall 78' has a substantially circular cross section. The first lateral wall 80' extends in a longitudinal direction parallel to the longitudinal axis X. The first lateral wall 80' extends about the longitudinal axis X'. The first lateral wall 80' may be cylindrical. The first base wall 78' and the first lateral wall 80' delimit together the first compartment 79'. Further, the first lateral wall 80' delimits the first top opening. The first top opening is opposite to the first base wall 78' relative to the first compartment 79'.

The casing 70' further comprises a second part 84' (or second casing 84') delimiting a second compartment 89'. The second casing 84' has a second top opening forming an access to the second compartment from outside the second casing 84'.

The second casing 84' comprises a second base wall 88' and a second lateral wall 90' connected to the second base wall 88'. The second base wall 88' extends in a transversal direction perpendicular to the longitudinal axis X'. The second base wall 88' has a substantially circular cross section. The second lateral wall 90' extends in a longitudinal direction parallel to the longitudinal axis X'. The second lateral wall 90' extends about the longitudinal axis X'. The second lateral wall 90' is cylindrical. The second base wall 88' and the second lateral wall 90' delimit together the second compartment 89'. Further, the lateral wall delimits the second top opening. The second top opening is opposite to the second base wall 88' relative to the second compartment 89'.

The second casing 84' is configured to be coupled to the first casing 74', such that the first base wall 78' covers the second top opening. When the first casing 74' and the second casing 84' are coupled together, the second compartment 89' extends between the second base wall 88' and the first base wall 78'.

Two threads can be used as means for coupling the second casing 84' to the first casing 74'. For instance, the first casing 74' comprises a first thread extending on the first lateral wall 80', and the second casing 84' comprises a second thread extending on the second lateral wall 90'. The threads are engaged with each other, thereby coupling the second casing 84' with the first casing 74'.

Both casings 74' et 76' can be separated by rotating one of the two casings relative to the other casing about axis X', thereby disengaging the two threads. Alternate or additional coupling means may be used for releasably coupling casing 74' and 84'.

The first compartment 89' and the second compartment 79' are separated from each other by the first base wall 78'.

The second casing 84' includes the second inlet 46' and the second outlet 48'. More precisely, the second inlet 46' and the second outlet 48' are formed in two protrusions extending from the second lateral wall. The second inlet 46' and the second outlet 48' are arranged so as to be parallel, such that an aqueous liquid enters in the cartridge 40' through the second inlet by flowing in a first transversal direction, then exits the cartridge through the second outlet 48' by flowing in a second transversal direction opposite to the first transversal direction (both transversal directions being perpendicular to the longitudinal axis X). This arrangement makes the connection of the cartridge to the system easier.

The casing 70 further comprises a third part 71' (or third casing 71').

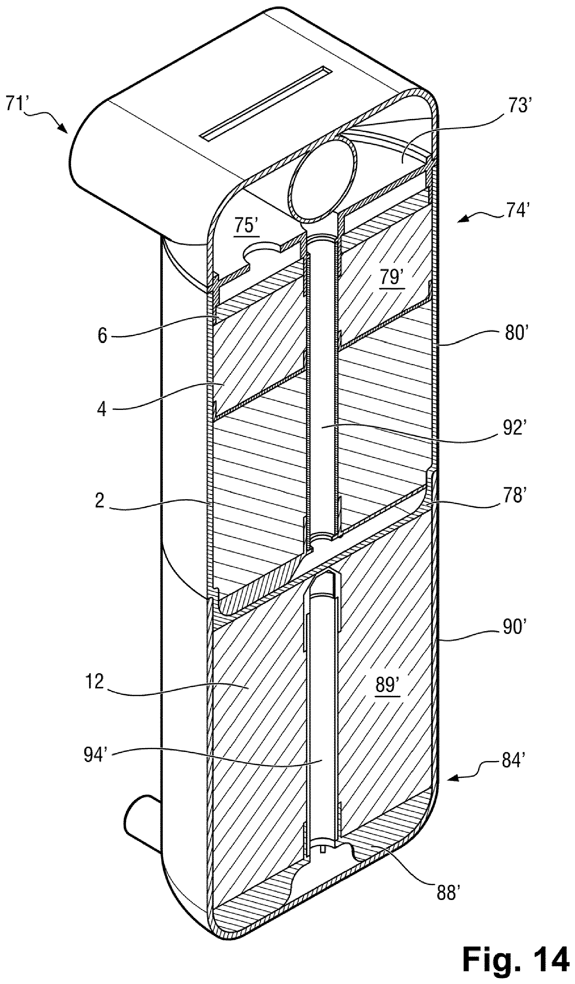

The third casing 71' comprises a third base wall 73'. As shown in figure 14, the third base wall 73' includes a central opening centered on longitudinal axis X, and at least one further opening with may be off-center with respect to the longitudinal access X or annular.

The third casing 71' is configured to be coupled to the first casing 74' in order to cover the first top opening thereof. When the outer cap 76' is coupled to the first casing 74', the first compartment 79' extends between the first base wall 78' and the third casing 71'.

Two threads can be used as means for coupling the third casing 71' to the first casing 74'. For instance, the first casing 74' comprises a third thread extending on the first lateral wall 80', and the third casing 71' comprises a fourth thread extending on a lateral wall thereof. The threads are engaged with each other, thereby coupling the third casing 71' with the first casing 74'. Both casings 74' et 71' can be separated by rotating one of the two casings relative to the other casing about axis X', thereby disengaging the two threads. Alternate or additional coupling means may be used for releasably coupling casing 74' and 71'.

The third casing 71' includes the first inlet 42' and the first outlet 44'. More precisely, the first inlet 42' and the second outlet 44' are formed in a lateral wall of the third part 71'. The first inlet 42' and the first outlet 44' are oriented parallel, such that an aqueous liquid enters in the cartridge 40' through the first inlet 42' by flowing in the first transversal direction already discussed above, then exits the cartridge through the second outlet 44' by flowing in the second transversal direction opposite to the first transversal direction already discussed above.

Besides, the third part 71' comprise a first passageway which fluidically connects the central opening to the first inlet 42', and a second passageway which fluidically connects the at least one further opening to the first outlet 44'. Both passageways are part of the first line.

The third casing 71' comprises a mixing chamber 75'. The mixing chamber 75' is part of the first line as well. the mixing chamber 75' is actually arranged downstream the first compartment 79' and upstream the first outlet 44'. In other words, any aqueous liquid flowing in the first compartment 79' then flows through the mixing chamber 75' before reaching the first outlet 44'.

The third casing 71' comprises two connectors able to be coupled to two further connectors of the system 1'. As shown in figure 13, the two connectors of the third casing are female connectors. One of said connectors comprising a groove extending about the first inlet 42' and the other connector comprises a groove extending about the first outlet 44'.

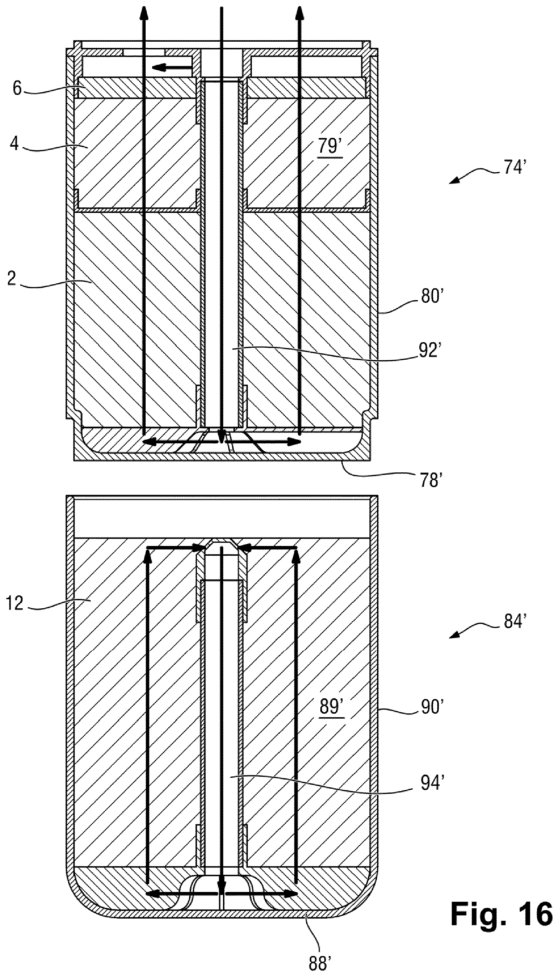

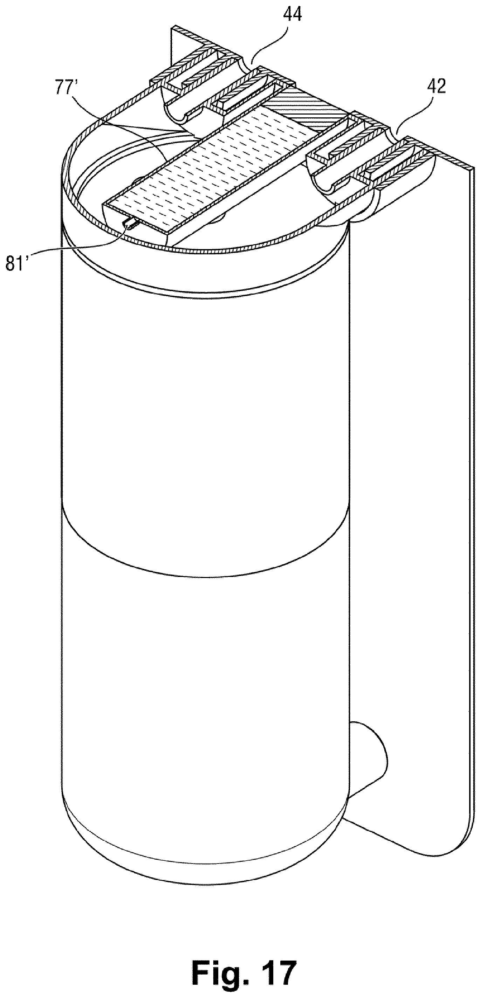

The third casing 71' further includes the mineralizer 14, which is of the liquid type. As already explained and shown in figures 16-17, the liquid mineralizer 14 comprises a cylinder 77' (or barrel) storing a liquid mineral concentrate C to be mixed with an aqueous liquid flowing in the second line of the cartridge 40'. The cylinder 77' has a nozzle 81' opening in the mixing chamber 75'.

The third casing 71' delimits an access to the cylinder 77' from outside the cartridge 40'. Furthermore, the mineralizer 14 comprises a gasket 83' arranged in the cylinder 77', and mobile in translation relative to the cylinder 77'. The liquid mineral concentrate C is stored in a portion of the cylinder 77' extending between the gasket 83' and the nozzle 81'. The gasket seals the cylinder 77', thereby preventing the liquid concentrate to exit the cylinder.

The liquid mineral can be expelled by the nozzle 81' by moving the gasket 83' in translation relative to the cylinder towards the nozzle 81'. In order to move the gasket 83' in translation relative to the cylinder, a plunger of can be inserted in the cylinder by the access above mentioned and press on the gasket 83'. As long as the gasket 83' remains stationary with respect to the cylinder 77', the liquid concentrate C stored in the cylinder 77' does to pass through the nozzle 81'. Thus, said liquid concentrate C cannot be mixed with any aqueous liquid present in the mixing chamber 75'. The gasket 83' is configured to remain stationary if no pressure is applied thereon.

It is to be noted that the cartridge 40' does not include the plunger or the actuator for moving the plunger. The plunger and the actuator are further parts of the system 1'. This makes the cartridge 40' cheaper.

The cartridge 40' further comprises a first pipe 92'. The first pipe 92' is part of the first line. The first pipe 92' is configured to convey a first aqueous liquid from the central opening of the third part 71' to the first compartment 79'. More precisely, the first pipe 92' is rectilinear in that it conveys the first aqueous liquid in the downward direction.

From a structural perspective, the first pipe 92' extends in the first compartment 79' from the third base wall 73' to the first base wall 78'. The first pipe 92' extends about the longitudinal axis X'. The first pipe 92' may be a tube (i.e. a pipe having a circular cross section). The first pipe 92' has at least one lateral outlet opening in the first compartment 89'. The or each lateral outlet is closer to the first base wall 78' than to the third base wall 73'. Any first aqueous liquid coming from the first pipe 92' and entering in the first compartment 79' is constrained to flow in the first compartment 79' in the upward direction towards the mixing chamber 75'.

The cartridge 40' further comprises a second pipe 94'. The second pipe 94' is part of the second line. The second pipe 94' is configured to convey a second aqueous liquid from the second compartment 89' towards the second outlet 48'.

From a structural perspective, the second pipe 94' extends in the second compartment between the first base wall 78' and the second base wall 88'. The second pipe 94' may contact the first base wall 78'. The second pipe 94' extends about the longitudinal axis X'.

The second pipe 94' may be a tube (a pipe having a circular cross section). The second pipe 94' has at least one lateral inlet opening in the second compartment 89'. The or each lateral inlet is closer to the first base wall 78 than to the second base wall 88. Any second aqueous liquid coming from the second inlet 46 is constrained to flow in the second compartment 89' in the upward direction second pipe 94', then to enter in the second pipe 94', then to flow in the second pipe 94' in the downward direction before reaching the second outlet 48'.

The first pipe 92' and the second pipe 94' are coaxial. The pipes 92' and 94' are separated by the first base wall 78'.

The first compartment 79' of the cartridge 40' stores the same components as the first compartment 89 of the cartridge 40 described above. In the first compartment 79' of the cartridge 40', the following components are stacked in the upward direction (from the first base wall 78' to the third base wall 73'):

- the first separator 96,
- the first purifier 4 (GAC),
- the second separator 98,
- the second purifier 6 (HMIX),
- a fleece 100,
- the third purifier 8 (MF).

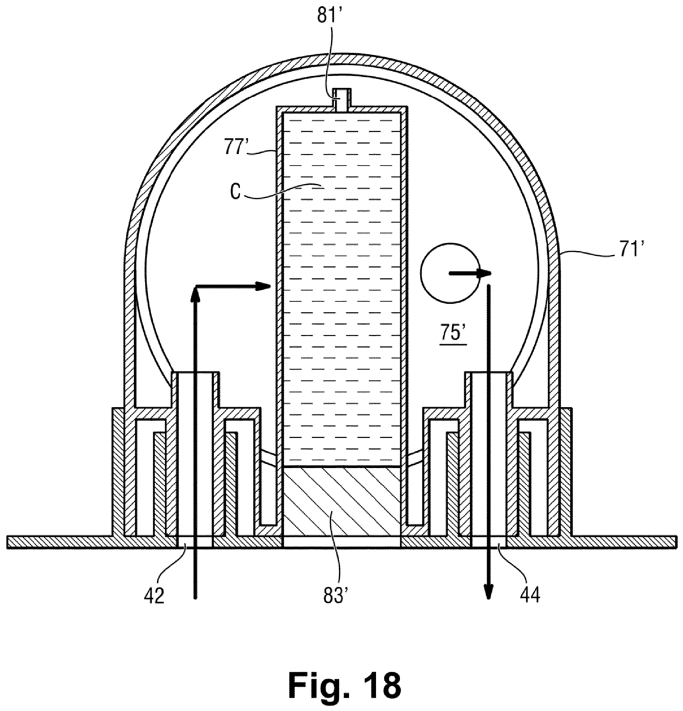

This means that a first aqueous liquid flowing in the first compartment 79' sequentially passes through the components listed above, by order of presentation (the first separator first, the third purifier 8 last), as shown in figure 18'.

Said stacked components (especially the purifiers 4, 6, 8) extend about the first pipe 92'. This arrangement allows a more uniform distribution in the first compartment of a first aqueous liquid supplied by the first pipe 92'.

The second compartment 89' of the cartridge 40' stores the demineralizer 12. No other component is present in the second compartment.

In the cartridge 40', each purifier 4, 6, 8 is arranged such that a first aqueous liquid has to flow through the purifier in a direction (the upward direction), and the demineralizer 12 is arranged such that a second aqueous liquid flows through the minerality modifying device in the very same direction. This arrangement is advantageous in that the cartridge can be placed in a position preventing bubbles to be trapped in the purifiers and in the demineralizer at the same time.

As explained above, the first part, the second part and the third part of the casing 70' can be separated from each other. This arrangement is environmentally friendly, because it avoids having to throw away a cartridge wherein some components still work.

## 9) Functioning modes of the circuit of system 1'

As already said above, a function of the circuit 18' is that of fluidically interconnecting the tank 2, at least one purifier, at least one minerality modifying device and an outlet 16.

The circuit 18' is configurable in different modes implementing different interconnections between some of the components listed above.

### Idle mode

The circuit 18' is configurable into an idle mode wherein the aqueous liquid stagnates at least in the tank 2.

The idle mode is obtained as follows by the controller 56: the dispense valve 30' is closed, the carbonation valve is closed, the pump 20 is turned off, and the motor coupled to the mineralizer 14 is turned off.

### Purification mode

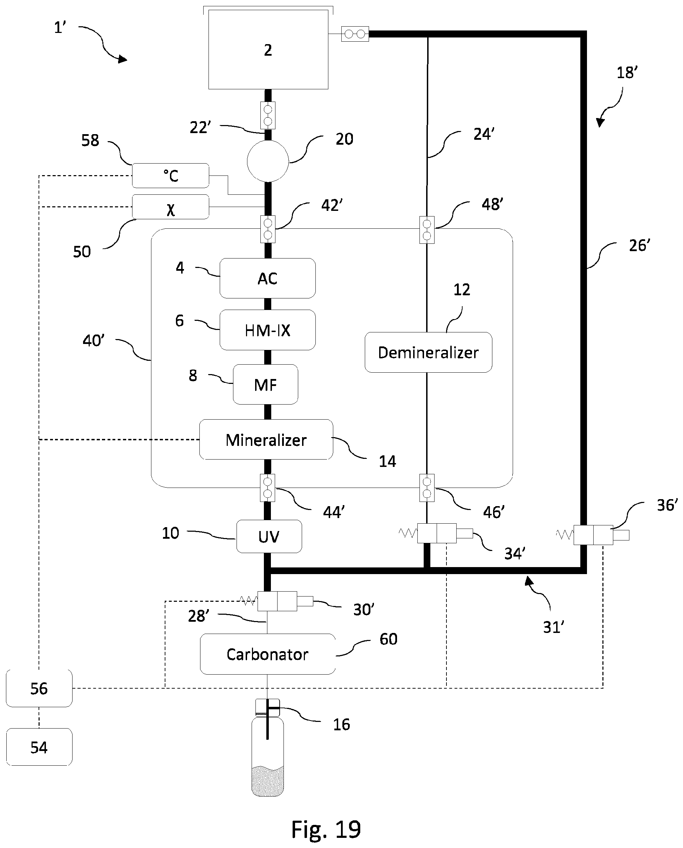

Referring to **figure 19,** the circuit 18' is configurable in a purification mode wherein the circuit 18' forms a first closed loop fluidically connecting at least one purifier to the tank 2, circulates the aqueous liquid in the first closed loop such that the aqueous liquid flows through the purifier and through the tank 2, and prevents the aqueous liquid from reaching the outlet 16 and from substantially modifying the amount of minerals of the aqueous liquid.

In fact, when the circuit 18' is configured in the purification mode, the aqueous liquid flowing in the first closed loop is prevented from reaching the demineralizer, and prevented from being mineralized by the mineralizer.

In the embodiment shown in figure 19, the purification mode is obtained as follows by means of the controller 56: the dispense valve 30' is closed, the valve assembly 31' is set in the second position (interconnecting the main line 22' and the bypass line 26'), the carbonator is turned off, the pump 20 is turned on. Furthermore, the motor coupled to the mineralizer 14 is turned off.

The first closed loop is actually formed by the tank 2, the main line 22', the valve assembly 31' and the bypass line 26'. The first line of the cartridge 40' forms a portion of the first closed loop. In contrast, the second line is not part of the first closed loop.

In the purification mode, the aqueous liquid stored in the tank 2 flows through the main line 22' including the first line of the cartridge 40, then is redirected to the tank 2 by means of the valve assembly 31' and the bypass line 26'. As a consequence, the aqueous liquid is purified, but the amount of minerals of the aqueous liquid does not substantially change.

More particularly, the aqueous liquid flows through the first line of the cartridge 40' as follows. The aqueous liquid enters the cartridge 40' by the first inlet 42', then flows through the first passageway formed in the third casing 71' then flows in the first pipe 92' in the downward direction, then reaches the first compartment 79'. Then, the aqueous flows in the first compartment 79' in the upward direction. The aqueous liquid is treated by the first purifier 4, then by the second purifier 6, then by the third purifier 8. Then, the aqueous liquid flows through the mixing chamber 75', then reaches the first outlet 44' of the cartridge. Since the motor coupled to the mineralizer is turned off, the gasket 83' remains stationary in the cylinder 77'. This prevents the liquid mineralizing concentrate C stored in the cylinder 77' from reaching chamber 75'.

**Minerality modifying mode**

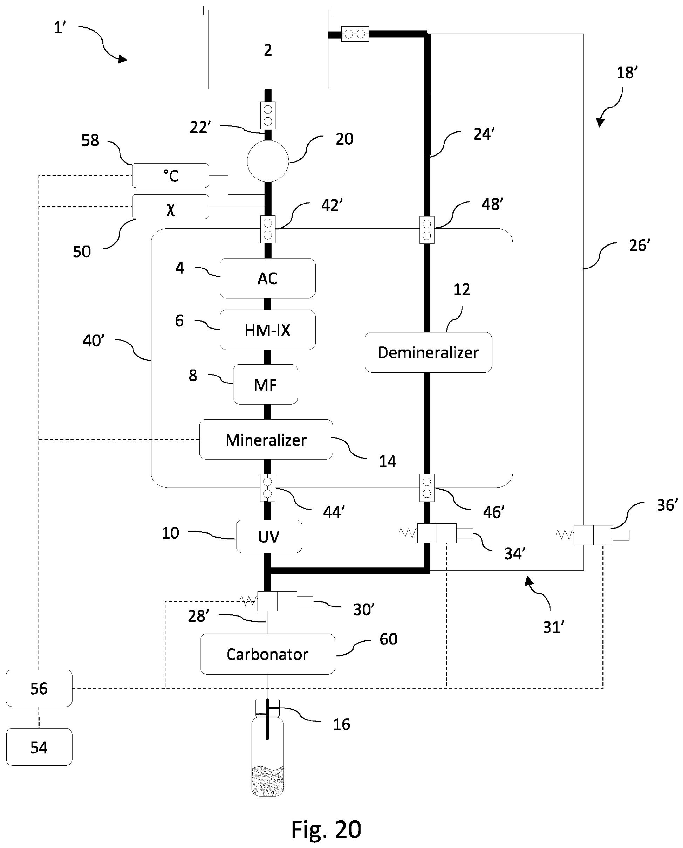

Referring to **figure 20,** the circuit 18' is configurable in a minerality modifying mode wherein the circuit 18' forms a second closed loop fluidically connecting a minerality modifying device of the system 1' to the tank 2, circulates the aqueous in the second closed loop such that the aqueous liquid flows through (and is treated by) the minerality modifying device and through the tank 2, and prevents the aqueous liquid from reaching the outlet 16.

More precisely, the minerality modifying mode is a demineralization mode, which means that the minerality modifying device included in the second closed loop is the demineralizer 12. Besides, in the demineralization mode, the aqueous liquid is not mineralized by the mineralizer 14.

In the second embodiment shown in figure 20, the purification mode is obtained as follows by means of the controller 56: the dispense valve 30' is closed, the valve assembly 31' is set in the first position (interconnecting the main line 22' and the minerality modifying line 24'), the carbonation valve is closed, the pump 20 is turned on, the motor of the mineralizer 14 is turned off.

The second closed loop is actually formed by the tank 2, the main line 22', the valve assembly 31' and the minerality modifying line 24'. Both the first line and the second line of the cartridge 40 are part of the second closed loop.

In the minerality modifying mode, the aqueous liquid stored in the tank 2 flows through the different purifiers arranged in the main line 22', then is redirected to the demineralizer 12 then to the tank 2 by means of the valve assembly 31' and the minerality modifying line 24'. As a consequence, the aqueous liquid is not only purified but its amount of minerals of decreased by the demineralizer 12.

The aqueous liquid flows through the first line of the cartridge 40' like in the purification mode.

Besides, the aqueous liquid flows through the second line of the cartridge 40' as follows. The aqueous liquid enters the cartridge 40' by the second inlet 46', then reaches the second compartment 89'. Then, the aqueous flows in the second compartment 89' in the upward direction. While flowing in the upward direction, the aqueous liquid is demineralized by the demineralizer 12 stored in the second compartment 89'. Then, the aqueous liquid enters the second pipe 94' then flowing through the second pipe 94' in the downward direction before reaching the second outlet 48'.

**Dispensing mode**

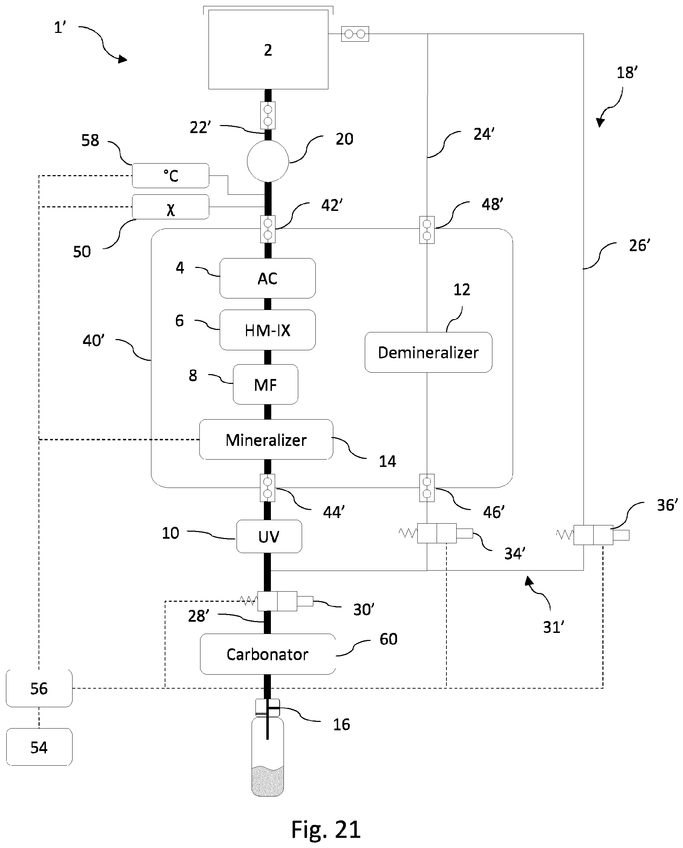

Referring to figure 21, the circuit 18' is further configurable into a dispensing mode wherein the circuit 18' forms a path fluidically connecting the tank 2 to the outlet 16, such that the aqueous liquid flows from the tank 2 to the outlet 16.

In the second embodiment shown in figure 21, the dispensing mode is obtained as follows: the dispense valve 30' is open, the valve assembly 31' is set in the third position (wherein the valve assembly 31' prevents an aqueous liquid contained in the main line 22' from reaching the return lines), the pump 20 is turned on.

In the dispensing mode, the motor of the mineralizer 14 may be turned on or off, depending on a target minerality to be obtained.

The path is actually formed by the main line 22', the dispense valve 30' and the dispense line 28'.

In the dispensing mode, the aqueous liquid stored in the tank 2 flows through the different purifiers arranged in the main line 22' and is optionally mixed with the liquid mineral provided by the mineralizer 14 before reaching the outlet 16. In other words, the aqueous liquid is purified again and its amount of minerals is optionally increased by the mineralizer 14 before being dispensed to a user. Besides, the aqueous liquid may also be carbonated using the carbonation system 60.

In the dispensing mode, the aqueous liquid flows through the first line of the cartridge 40' like in the purification mode if no mineralization is need. If the controller 56 decides to mineralize the aqueous liquid, a plunger is moved in the cylinder 77' so as to press on the gasket 83'. This causes the gasket 83' to be moved towards the nozzle 81', and some of the liquid mineral concentrate C to be expelled in the mixing chamber 75'. The aqueous liquid flowing in the mixing chamber 75' is therefore mixed with the liquid mineral concentrate C.

## 10) Methods performed by the "looping" system / switching logic between modes

Like in system 1, the controller 56 of the system 1' is in charge of switching the circuit 18' between the modes described above, by controlling the valves, the pump 20 and or the motor of the mineralizer 14 (if said motor is present). The controller 56 is configured to switch the circuit into the above-mentioned modes by applying the rules explained in the sequence below.

The controller 56 is configured to switch the circuit 18' from the minerality modifying mode to the purification mode once a parameter sensed by the sensing system 50 (for example conductivity) has reached a target value.

The controller 56 is configured to switch the circuit 18' from the minerality modifying mode to the purification mode once it detects that circuit 18' has been operating in the minerality modifying mode for a maximum duration. For this purpose, the controller can start a timer when the circuit 18' is switched in the minerality modifying mode and switch the circuit 18' into the purification mode once the value of the timer reaches the maximum duration. The maximum duration is defined in advance and known by the controller.

Besides, the controller 56 is configured to switch the circuit 18' into the dispensing mode whenever the user interface detects that a user requests to be dispensed the aqueous liquid.

The method below illustrates how the system may work in practice.

Initially, the circuit 18' is in the idle mode. Then, the system 1' is turned on by a user via the user interface, for instance an on/off button.

A user feeds the tank 2 with an aqueous liquid, for example water.

Then the controller 56 switches the circuit 18' into the purification mode. This switch may be automatically triggered by the controller upon detecting one of the following events: the tank has been removed and then put back in the system 1' with an aqueous liquid therein; a user has pressed on a button to dispense water; and/or a timer has expired, for example after several hours, such as 2 hours, 5 hours or 24' hours.

Once the circuit 18' is set in the purification mode, the aqueous liquid stored in the tank 2 starts flowing in the first closed loop formed by the main line 22' and the bypass line 26'. From this point on, the system 1' keeps on purifying the aqueous liquid, but its amount of minerals is not substantially modified by the system 1', since the aqueous liquid is prevented from reaching the demineralizer 12 and the mineralizer 14.

In the meantime, the controller 56 determines a target value for the parameter to be sensed by sensing system 50. This target value may be equal to a first value sensed by sensor 56 multiplied by a constant lower than 1. For instance, when this constant is 0.5, the target value is 50% of the first value that was sensed.

In an embodiment, the target value is known in advance and stored in a memory of the system 1'. In this case the controller merely loads this target value from the memory when the system is turned on. In another embodiment, the target value is computed by the controller. In particular, the target value may be updated from an estimated remaining lifetime of the cartridge 40'.

Besides, the controller 56 collects data provided by the temperature sensor 58 and the sensing system 50.

If the parameter value sensed by the sensing system 50 is different from the target value, the controller switches the circuit 18' into the minerality modifying mode and starts a timer (this timer is for example included in the controller). From this point on, the aqueous liquid circulates in the second closed loop including the demineralizer 12 and is therefore demineralized before returning to the tank 2.

Then, the controller 56 switches the circuit 18' into the idle mode once at least one of the following conditions is met: the sensing system 50 senses a parameter value reaches the target value, and/or the timer indicates that the time spent by the circuit 18' in the minerality modifying mode has reached the maximum duration.

From this point on, the system 1' may switch from idle to purification mode when a predefined standby time is reached.

Later on, the controller 56 switches the circuit 18' from the idle mode to the dispensing mode whenever the user interface detects that a user requests to be dispensed the aqueous liquid. The aqueous liquid flows through the path formed by the main line 22' and the dispense line 28'.

At this stage, the mineralizer 14 may be used to mineralize the aqueous flowing through the main line 22', before reaching the outlet 16. The aqueous liquid is optionally carbonated using the carbonation system 60.

The mineralizer 14 may be left unused to mineralize the aqueous liquid in the dispense mode if the time spent in the minerality modifying mode has reached the maximum duration. Otherwise, the mineralizer 14 may be used.

The system 1' is advantageous in that it is able to dispense water having a controlled taste and being sufficiently pure. The system 1' is an improvement over other systems wherein an aqueous liquid is constrained to flow through a purifier and a minerality sequentially. Indeed, in said other systems, the more the aqueous liquid is purified, the more the amount of minerals in the aqueous liquid changes. As a consequence, the water may not be pure enough when a desired level of minerality is reached. This problem does not occur in system 1' thanks to the ability of the circuit 18' to switch between the different modes described above.

## 8) Other embodiments / variants

The cartridge 40, 40' share a common concept: they both comprise two separated lines, one of the lines including at least one purifier and the other line including a minerality modifying device. Thanks to this common concept, each of the cartridges 40, 40' is versatile and can be used to implementing various water treatment strategies. In particular, some aqueous water can be treated by the first line only, or by the second line only, or by the two lines sequentially (like in the path shown in figure 8 and in the loop shown in figure 20).

It is to be noted that cartridge 40 could be included in system 1'. Conversely, the cartridge 40' could be included in system 1.

Fewer purifiers may be included in the first line of the cartridges 40, 40' (one single purifier 4, 6 or 8; or two purifiers among purifiers 4, 6, 8), and/or their order may be different. Purifiers 4 and 6 can also be mixed.

In the cartridges 40, 40', the first inlet and the first outlet are arranged parallel, which is advantageous in that it makes easier a connection of the cartridge to a system. the second inlet and the second outlet are also arranged parallel in said embodiments, which also contributes to make this connection easier. In particular, having the four openings parallel make the connection particularly easy. But other inlet/outlet orientations are possible.

## Claims

1. A cartridge (40, 40') comprising:

   • a first line comprising:

     ◦ a first inlet (42, 42') for inputting a first aqueous liquid into the cartridge,
     ◦ a purifier (4, 6, 8) configured to purify the first aqueous liquid without substantially modifying an amount of minerals in the first aqueous liquid,
     ◦ a first outlet (44, 44') for outputting the first aqueous liquid outside the cartridge (42) after the first aqueous liquid has been purified by the purifier (3),

   • a second line separated from the first line, the second line comprising:

     ◦ a second inlet (46, 46') for inputting a second aqueous liquid into the cartridge,
     ◦ a minerality modifying device (12) configured to substantially modify an amount of minerals in the second aqueous liquid, and
     ◦ a second outlet (48, 48') for outputting the aqueous liquid outside the cartridge after the second aqueous liquid has been treated by the minerality modifying device (12)

     • a cylinder (77') storing a liquid mineral concentrate (C), the cylinder (77') delimiting an access allowing a plunger external to the cartridge to be releasably inserted in the cylinder (77'),
     • a gasket (83') sealing the cylinder (77') and able to be translated with respect to the cylinder (77') by the plunger, thereby causing an injection of some of the liquid mineral concentrate (C) into the first line.

2. The cartridge (40, 40') of the preceding claim, wherein:

   • the purifier (4, 6, 8) is arranged such that the first aqueous liquid flows through the purifier (4, 6, 8) in a first direction,
   • the minerality modifying device (12) is arranged such that the second aqueous liquid flows through the minerality modifying device (12) in the first direction.

3. The cartridge (40, 40') of the preceding claim, wherein:

   • the first line comprises a first pipe (92, 92') for conveying the first aqueous liquid in a second direction opposite to the first direction,
   • the second line comprises a second pipe (94, 94') for conveying the second aqueous liquid in the second direction.

4. The cartridge (40, 40') of any one of the preceding claims, wherein:

   • the first line comprises a first pipe (92, 92') for conveying the first aqueous liquid, wherein the purifier extends about the first pipe (92, 92'), and/or
   • the second line comprises a second pipe (94, 94') for conveying the second aqueous liquid, wherein the minerality modifying device extends about the second pipe (94, 94').

5. The cartridge (40, 40') of any one of the preceding claims, wherein:

   • the first line comprises a first pipe (92) for conveying the first aqueous liquid,
   • the second line comprises a second pipe (94) for conveying the second aqueous liquid,
   • one of the first pipe 92 and the second pipe (94) extends about the other of the first pipe (92) and the second pipe (94).

6. The cartridge (40, 40') of any one of the preceding claims, wherein the first line or the second line comprises a further minerality modifying device, wherein one of the minerality modifying device and the further minerality modifying device is a mineralizer, and the other of the modifying device and the further minerality modifying device is a demineralizer.

7. The cartridge (40, 40') of any one of the preceding claims, wherein the minerality modifying device is a demineralizer.

8. The cartridge (40) of any one of the preceding claims, wherein the second line comprises a solid mineralizer.

9. The cartridge (40) of any one of the preceding claims, wherein the first inlet (42), the first outlet (44), the second inlet (46) and the second outlet (48) are four openings, wherein the four openings comprise a central opening and three annular opening extending about the central opening.

10. The cartridge (40, 40') of any one of the preceding claims, wherein

• the first inlet (42, 42') and the first outlet (44, 44') are arranged such that the first aqueous liquid enters in the cartridge (40, 40') through the first inlet (42, 42') by flowing in a first direction, then exits the cartridge through the first outlet (44, 44') by flowing in a second direction opposite to the first direction, and/or
• the second inlet (46, 46') and the second outlet (48, 48') are arranged such that the second aqueous liquid enters in the cartridge (40, 40') through the second inlet by flowing in a first direction, then exits the cartridge through the second outlet (48, 48') by flowing in a second direction opposite to the first direction.

11. The cartridge of any one of the preceding claims, comprising a casing (70, 70') comprising a first part storing the purifier (4, 6, 8) and a second part storing the minerality modifying device (12), wherein the second part is separable from the first part.

12. A system (1, 1') comprising:

• a tank (2) for storing an aqueous liquid,
• an outlet (16) for dispensing the aqueous liquid to a user,
• a cartridge (40, 40') according to any one of claims 1-12, wherein the cartridge (40, 40') is a removable unit of the system (1),
• a circuit (18, 18') configured to circulate the aqueous liquid in the first line of the cartridge (40, 40') and in the second line of the cartridge (40, 40') before the aqueous liquid reaches the outlet (16).

13. The system (1) of the preceding claim, wherein the circuit (18) is configured to be set into:

• a first mode wherein the circuit forms a first path fluidically connecting the tank (2), the first line of the cartridge (40, 40') and the outlet (16), wherein the circuit circulates the aqueous liquid in the first path such that the aqueous liquid passes through the first line of the cartridge (40, 40') before reaching the outlet (16), and wherein the circuit prevents the aqueous liquid from reaching the second line of the cartridge (40, 40'), and
• a second mode wherein the circuit forms a second path fluidically connecting the tank (2), the second line and the outlet (16), wherein the circuit circulates the aqueous liquid in the second path such that the aqueous liquid passes through the second line of the cartridge (40, 40') before reaching the outlet (16), and wherein the circuit prevents the aqueous liquid from reaching the first line of the cartridge (40, 40').

14. The system (1') of claim 12, wherein the circuit (18') is configured to be set into:

• a first mode wherein the circuit forms a first closed loop fluidically connecting the first line to the tank (2), wherein the circuit circulates the aqueous liquid in the first closed loop such that the aqueous liquid flows through the first line of the cartridge (40, 40') and through the tank (2), and wherein the circuit prevents the aqueous liquid from reaching the outlet (16) and from reaching the second line of the cartridge (40, 40'),
• a second mode wherein the circuit forms a second closed loop fluidically connecting the second line to the tank (2), wherein the circuit circulates the aqueous in the second closed loop such that the aqueous liquid flows through the second line of the cartridge (40, 40') and through the tank (2), and wherein the circuit prevents the aqueous liquid from reaching the outlet (16), and
• a third mode wherein the circuit forms a path fluidically connecting the tank (2) to the outlet (16), such that the aqueous liquid flows from the tank (2) to the outlet (16).

**Patentansprüche**

1. Kartusche (40, 40') umfassend:

• eine erste Leitung umfassend:

◦ einen ersten Einlass (42, 42') zum Einfüllen einer ersten wässrigen Flüssigkeit in die Kartusche,

○ einen Reiniger (4, 6, 8), der konfiguriert ist, um die erste wässrige Flüssigkeit zu reinigen, ohne eine Menge von Mineralien in der ersten wässrigen Flüssigkeit wesentlich zu modifizieren,
○ einen ersten Auslass (44, 44') zum Ausgeben der ersten wässrigen Flüssigkeit außerhalb der Kartusche (42), nachdem die erste wässrige Flüssigkeit durch den Reiniger (3) gereinigt wurde,

• eine zweite Leitung, die von der ersten Leitung getrennt ist, wobei die zweite Leitung umfasst:

○ einen zweiten Einlass (46, 46') zum Einfüllen einer zweiten wässrigen Flüssigkeit in die Kartusche,
○ eine Vorrichtung (12) zum Modifizieren der Mineralität, die konfiguriert ist, um die Menge der Mineralien in der zweiten wässrigen Flüssigkeit wesentlich zu modifizieren, und
○ einen zweiten Auslass (48, 48') zum Ausgeben der wässrigen Flüssigkeit außerhalb der Kartusche, nachdem die zweite wässrige Flüssigkeit durch die Vorrichtung (12) zum Modifizieren der Mineralität behandelt worden ist

• einen Zylinder (77'), der ein flüssiges Mineralkonzentrat (C) speichert, wobei der Zylinder (77') einen Zugang begrenzt, der es ermöglicht, einen Kolben außerhalb der Kartusche lösbar in den Zylinder (77') einzuführen,
• eine Dichtung (83'), die den Zylinder (77') abdichtet und durch den Kolben in Bezug auf den Zylinder (77') verschoben werden kann, wodurch ein Einspritzen eines Teils des flüssigen Mineralkonzentrats (C) in die erste Leitung bewirkt wird.

2. Kartusche (40, 40') nach dem vorstehenden Anspruch, wobei:

• der Reiniger (4, 6, 8) so angeordnet ist, dass die erste wässrige Flüssigkeit durch den Reiniger (4, 6, 8) in eine erste Richtung fließt,
• die Vorrichtung (12) zum Modifizieren der Mineralität so angeordnet ist, dass die zweite wässrige Flüssigkeit durch die Vorrichtung zum Modifizieren der Mineralität (12) in die erste Richtung fließt.

3. Kartusche (40, 40') nach dem vorstehenden Anspruch, wobei:

• die erste Leitung ein erstes Rohr (92, 92') zum Fördern der ersten wässrigen Flüssigkeit in eine zweite Richtung entgegengesetzt zur ersten Richtung umfasst,
• die zweite Leitung ein zweites Rohr (94, 94') zum Fördern der zweiten wässrigen Flüssigkeit in die zweite Richtung umfasst.

4. Kartusche (40, 40') nach einem der vorstehenden Ansprüche, wobei:

• die erste Leitung ein erstes Rohr (92, 92') zum Fördern der ersten wässrigen Flüssigkeit umfasst, wobei sich der Reiniger um das erste Rohr (92, 92') herum erstreckt, und/oder
• die zweite Leitung ein zweites Rohr (94, 94') zum Fördern der zweiten wässrigen Flüssigkeit umfasst, wobei sich die Vorrichtung zum Modifizieren der Mineralität um das zweite Rohr (94, 94') herum erstreckt.

5. Kartusche (40, 40') nach einem der vorstehenden Ansprüche, wobei:

• die erste Leitung ein erstes Rohr (92) zum Fördern der ersten wässrigen Flüssigkeit umfasst,
• die zweite Leitung ein zweites Rohr (94) zum Fördern der zweiten wässrigen Flüssigkeit umfasst,
• eines von dem ersten Rohr (92) und dem zweiten Rohr (94) sich um das andere von dem ersten Rohr (92) und dem zweiten Rohr (94) herum erstreckt.

6. Kartusche (40, 40') nach einem der vorstehenden Ansprüche, wobei die erste Leitung oder die zweite Leitung eine weitere Vorrichtung zum Modifizieren der Mineralität umfasst, wobei eine von der Vorrichtung zum Modifizieren der Mineralität und der weiteren Vorrichtung zum Modifizieren der Mineralität ein Mineralisierer ist, und die andere der Vorrichtung zum Modifizieren und der weiteren Vorrichtung zum Modifizieren der Mineralität ein Entmineralisierer ist.

7. Kartusche (40, 40') nach einem der vorstehenden Ansprüche, wobei die Vorrichtung zum Modifizieren der Mineralität ein Entmineralisierer ist.

8. Kartusche (40) nach einem der vorstehenden Ansprüche, wobei die zweite Leitung einen festen Mineralisierer umfasst.

9. Kartusche (40) nach einem der vorstehenden Ansprüche, wobei der erste Einlass (42), der erste Auslass (44), der zweite Einlass (46) und der zweite Auslass (48) vier Öffnungen sind, wobei die vier Öffnungen eine zentrale Öffnung und drei ringförmige Öffnungen umfassen, die sich um die zentrale Öffnung herum erstrecken.

**10.** Kartusche (40, 40') nach einem der vorstehenden Ansprüche, wobei

   • der erste Einlass (42, 42') und der erste Auslass (44, 44') so angeordnet sind, dass die erste wässrige Flüssigkeit durch den ersten Einlass (42, 42') in die Kartusche (40, 40') eintritt, indem sie in einer ersten Richtung fließt, und dann die Kartusche durch den ersten Auslass (44, 44') verlässt, indem sie in einer zweiten, der ersten Richtung entgegengesetzten Richtung fließt, und/oder
   • der zweite Einlass (46, 46') und der zweite Auslass (48, 48') so angeordnet sind, dass die zweite wässrige Flüssigkeit durch den zweiten Einlass in die Kartusche (40, 40') eintritt, indem sie in einer ersten Richtung fließt, und dann die Kartusche durch den zweiten Auslass (48, 48') verlässt, indem sie in einer zweiten, der ersten Richtung entgegengesetzten Richtung fließt.

**11.** Kartusche nach einem der vorstehenden Ansprüche, umfassend ein Gehäuse (70, 70') mit einem ersten Teil, in dem der Reiniger (4, 6, 8) untergebracht ist, und einem zweiten Teil, in dem die Vorrichtung (12) zum Modifizieren der Mineralität untergebracht ist, wobei der zweite Teil von dem ersten Teil trennbar ist.

**12.** System (1, 1') umfassend:

   • einen Tank (2) zum Aufbewahren einer wässrigen Flüssigkeit,
   • einen Auslass (16) zum Ausgeben der wässrigen Flüssigkeit an einen Benutzer,
   • eine Kartusche (40, 40') nach einem der Ansprüche 1 bis 12, wobei die Kartusche (40, 40') eine herausnehmbare Einheit des Systems (1) ist,
   • einen Kreislauf (18, 18'), der konfiguriert ist, um die wässrige Flüssigkeit in der ersten Leitung der Kartusche (40, 40') und in der zweiten Leitung der Kartusche (40, 40') zirkulieren zu lassen, bevor die wässrige Flüssigkeit den Auslass (16) erreicht.

**13.** System (1) nach dem vorstehenden Anspruch, wobei der Kreislauf (18) so konfiguriert ist, dass er eingestellt werden kann auf:

   • einen ersten Modus, bei dem der Kreislauf einen ersten Pfad bildet, der den Tank (2), die erste Leitung der Kartusche (40, 40') und den Auslass (16) fluidisch verbindet, wobei der Kreislauf die wässrige Flüssigkeit in dem ersten Pfad zirkulieren lässt, so dass die wässrige Flüssigkeit durch die erste Leitung der Kartusche (40, 40') hindurchgeht, bevor sie den Auslass (16) erreicht, und wobei der Kreislauf verhindert, dass die wässrige Flüssigkeit die zweite Leitung der Kartusche (40, 40') erreicht, und
   • einen zweiten Modus, bei dem der Kreislauf einen zweiten Pfad bildet, der den Tank (2), die zweite Leitung und den Auslass (16) fluidisch verbindet, wobei der Kreislauf die wässrige Flüssigkeit in dem zweiten Pfad zirkulieren lässt, so dass die wässrige Flüssigkeit durch die zweite Leitung der Kartusche (40, 40') hindurchgeht, bevor sie den Auslass (16) erreicht, und wobei der Kreislauf verhindert, dass die wässrige Flüssigkeit die erste Leitung der Kartusche (40, 40') erreicht.

**14.** System (1) nach Anspruch 12, wobei der Kreislauf (18) so konfiguriert ist, dass er eingestellt werden kann auf:

   • einen ersten Modus, bei dem der Kreislauf einen ersten geschlossene Schleife bildet, die die erste Leitung mit dem Tank (2) fluidisch verbindet, wobei der Kreislauf die wässrige Flüssigkeit in der ersten geschlossenen Schleife zirkulieren lässt, so dass die wässrige Flüssigkeit durch die erste Leitung der Kartusche (40, 40') und durch den Tank (2) fließt, und wobei der Kreislauf verhindert, dass die wässrige Flüssigkeit den Auslass (16) erreicht und dass sie die zweite Leitung der Kartusche (40, 40') erreicht,
   • einen zweiten Modus, bei dem der Kreislauf eine zweite geschlossene Schleife bildet, die die zweite Leitung mit dem Tank (2) fluidisch verbindet, wobei der Kreislauf die wässrige Flüssigkeit in der zweiten geschlossenen Schleife zirkulieren lässt, so dass die wässrige Flüssigkeit durch die zweite Leitung der Kartusche (40, 40') und durch den Tank (2) fließt, und wobei der Kreislauf verhindert, dass die wässrige Flüssigkeit den Auslass (16) erreicht, und
   • einen dritten Modus, bei dem der Kreislauf einen Pfad bildet, der den Tank (2) mit dem Auslass (16) fluidisch verbindet, so dass die wässrige Flüssigkeit von dem Tank (2) zu dem Auslass (16) fließt.

**Revendications**

**1.** Cartouche (40, 40') comprenant :

   • une première conduite comprenant :

      ○ une première entrée (42, 42') pour introduire un premier liquide aqueux dans la cartouche,
      ○ un purificateur (4, 6, 8) configuré pour purifier le premier liquide aqueux sans modifier de manière substantielle la quantité de minéraux dans le premier liquide aqueux,

◦ une première sortie (44, 44') pour évacuer le premier liquide aqueux à l'extérieur de la cartouche (42) après que le premier liquide aqueux a été purifié par le purificateur (3),

• une deuxième ligne séparée de la première ligne, la deuxième ligne comprenant :

◦ une deuxième entrée (46, 46') pour introduire un deuxième liquide aqueux dans la cartouche,
◦ un dispositif de modification de la minéralité (12) configuré pour modifier sensiblement la quantité de minéraux dans le deuxième liquide aqueux, et
◦ une deuxième sortie (48, 48') pour évacuer le liquide aqueux à l'extérieur de la cartouche après que le deuxième liquide aqueux a été traité par le dispositif de modification de la minéralité (12)

• un cylindre (77') stockant un concentré minéral liquide (C), le cylindre (77') délimitant un accès permettant à un piston externe à la cartouche d'être inséré de manière amovible dans le cylindre (77'),
• un joint d'étanchéité (83') assurant l'étanchéité du cylindre (77') et pouvant être déplacé par rapport au cylindre (77') par le piston, provoquant ainsi l'injection d'une partie du concentré minéral liquide (C) dans la première ligne d'.

2. La cartouche (40, 40') de la revendication précédente, dans laquelle :

• le purificateur (4, 6, 8) est agencé de telle sorte que le premier liquide aqueux s'écoule à travers le purificateur (4, 6, 8) dans une première direction,
• le dispositif de modification de la minéralité (12) est agencé de telle sorte que le deuxième liquide aqueux s'écoule à travers le dispositif de modification de la minéralité (12) dans la première direction.

3. La cartouche (40, 40') de la revendication précédente, dans laquelle :

• la première ligne comprend un premier tuyau (92, 92') destiné à transporter le premier liquide aqueux dans une deuxième direction opposée à la première direction,
• la deuxième ligne comprend un deuxième tuyau (94, 94') destiné à transporter le deuxième liquide aqueux dans la deuxième direction.

4. La cartouche (40, 40') de l'une quelconque des revendications précédentes, dans laquelle :

• la première ligne comprend un premier tuyau (92, 92') destiné à transporter le premier liquide aqueux, dans laquelle le purificateur s'étend autour du premier tuyau (92, 92'), et/ou
• la deuxième ligne comprend un deuxième tuyau (94, 94') destiné à transporter le deuxième liquide aqueux, dans laquelle le dispositif de modification de la minéralité s'étend autour du deuxième tuyau (94, 94').

5. La cartouche (40, 40') selon l'une quelconque des revendications précédentes, dans laquelle :

• la première ligne comprend un premier tuyau (92) pour transporter le premier liquide aqueux,
• la deuxième ligne comprend un deuxième tuyau (94) destiné à transporter le deuxième liquide aqueux,
• l'un des premier tuyau 92 et deuxième tuyau (94) s'étend autour de l'autre des premier tuyau (92) et deuxième tuyau (94).

6. Cartouche (40, 40') selon l'une quelconque des revendications précédentes, dans laquelle la première conduite ou la deuxième conduite comprend un autre dispositif de modification de la minéralité, dans laquelle l'un des dispositifs de modification de la minéralité et l'autre dispositif de modification de la minéralité est un minéralisateur, et l'autre dispositif de modification de la minéralité et l'autre dispositif de modification de la minéralité est un déminéralisateur.

7. Cartouche (40, 40') selon l'une quelconque des revendications précédentes, dans laquelle le dispositif de modification de la minéralité est un déminéralisateur.

8. Cartouche (40) selon l'une quelconque des revendications précédentes, dans laquelle la deuxième ligne comprend un minéralisateur solide.

9. Cartouche (40) selon l'une quelconque des revendications précédentes, dans laquelle la première entrée (42), la première sortie (44), la deuxième entrée (46) et la deuxième sortie (48) sont quatre ouvertures, les quatre ouvertures comprenant une ouverture centrale et trois ouvertures annulaires s'étendant autour de l'ouverture centrale.

10. Cartouche (40, 40') selon l'une quelconque des revendications précédentes, dans laquelle

• la première entrée (42, 42') et la première sortie (44, 44') sont disposées de telle sorte que le premier liquide aqueux pénètre dans la cartouche (40, 40') par la première entrée (42, 42') en s'écoulant dans une première direction, puis sort de la cartouche par la première sortie (44, 44') en s'écoulant dans une deuxième direction opposée à la première direction, et/ou

• la deuxième entrée (46, 46') et la deuxième sortie (48, 48') sont agencées de telle sorte que le deuxième liquide aqueux pénètre dans la cartouche (40, 40') par la deuxième entrée en s'écoulant dans une première direction, puis sorte de la cartouche par la deuxième sortie (48, 48') en s'écoulant dans une deuxième direction opposée à la première direction.

11. Cartouche selon l'une quelconque des revendications précédentes, comprenant un boîtier (70, 70') comprenant une première partie stockant le purificateur (4, 6, 8) et une deuxième partie stockant le dispositif de modification de la minéralité (12), dans laquelle la deuxième partie est séparable de la première partie.

12. Système (1, 1') comprenant :

• un réservoir (2) destiné à stocker un liquide aqueux,
• une sortie (16) pour distribuer le liquide aqueux à un utilisateur,
• une cartouche (40, 40') selon l'une quelconque des revendications 1 à 12, dans lequel la cartouche (40, 40') est une unité amovible du système (1),
• un circuit (18, 18') configuré pour faire circuler le liquide aqueux dans la première conduite de la cartouche (40, 40') et dans la deuxième conduite de la cartouche (40, 40') avant que le liquide aqueux n'atteigne la sortie (16).

13. Système (1) selon la revendication précédente, dans lequel le circuit (18) est configuré pour être placé dans :

• un premier mode dans lequel le circuit forme un premier chemin reliant fluidiquement le réservoir (2), la première conduite de la cartouche (40, 40') et la sortie (16), dans lequel le circuit fait circuler le liquide aqueux dans le premier trajet de telle sorte que le liquide aqueux passe à travers la première conduite de la cartouche (40, 40') avant d'atteindre la sortie (16), et dans lequel le circuit empêche le liquide aqueux d'atteindre la deuxième conduite de la cartouche (40, 40'), et
• un deuxième mode dans lequel le circuit forme un deuxième chemin reliant fluidiquement le réservoir (2), la deuxième ligne et la sortie (16), dans lequel le circuit fait circuler le liquide aqueux dans le deuxième trajet de telle sorte que le liquide aqueux passe à travers la deuxième ligne de la cartouche (40, 40') avant d'atteindre la sortie (16), et dans lequel le circuit empêche le liquide aqueux d'atteindre la première ligne de la cartouche (40, 40').

14. Le système (1') selon la revendication 12, dans lequel le circuit (18') est configuré pour être réglé dans :

• un premier mode dans lequel le circuit forme une première boucle fermée reliant fluidiquement la première ligne au réservoir (2), dans lequel le circuit fait circuler le liquide aqueux dans la première boucle fermée de telle sorte que le liquide aqueux s'écoule à travers la première ligne de la cartouche (40, 40') et à travers le réservoir (2), et dans lequel le circuit empêche le liquide aqueux d'atteindre la sortie (16) et d'atteindre la deuxième conduite de la cartouche (40, 40'),
• un deuxième mode dans lequel le circuit forme une deuxième boucle fermée reliant fluidiquement la deuxième conduite au réservoir (2), dans lequel le circuit fait circuler le liquide aqueux dans la deuxième boucle fermée de telle sorte que le liquide aqueux s'écoule à travers la deuxième conduite de la cartouche (40, 40') et à travers le réservoir (2), et dans lequel le circuit empêche le liquide aqueux d'atteindre la sortie (16), et
• un troisième mode dans lequel le circuit forme un chemin reliant fluidiquement le réservoir (2) à la sortie (16), de telle sorte que le liquide aqueux s'écoule du réservoir (2) vers la sortie (16).

**Fig. 1**

Fig. 2

**Fig. 3**

**Fig. 4**

Fig. 5

# Fig. 6

**Fig. 7**

Fig. 8

M1

Detecting that rinsing the system is required — S2

Setting the circuit in the bypass mode — S4

Sensing a first conductivity $\chi_{feed}$ of an aqueous liquid as not processed by any minerality modifying device — S6

Determining a target conductivity $\chi_{target}$ — S8

Setting the circuit in the minerality modifying mode — S10

Sensing a second conductivity $\chi_{outlet}$ of the aqueous liquid processed by the minerality modifying devices — S12

S14 $\quad |\chi_{outlet} - \chi_{feed}| < S\,?$ — No

Yes

Raising an alarm — S16

Fig. 9

M2

Detecting that a volume of aqueous liquid is to be dispensed — S22

Setting the circuit in the bypass mode — S24

Sensing a first conductivity $\chi_{feed}$ of an aqueous liquid as not processed by any minerality modifying device — S26

Computing a bypass ratio b — S28

Setting the circuit in the minerality modifying mode — S30

Sensing a second conductivity $\chi_{outlet}$ of the aqueous liquid processed by the minerality modifying devices — S32

Causing the circuit to alternate between the bypass mode and the minerality modifying mode such that a predefined quantity of aqueous liquid is delivered, with a conductivity corresponding to the target conductivity — S34

$b < Bmin$ ? — S36 — No

Yes

Raising an alarm — S38

Fig. 10

Fig. 11a

Fig. 11b

Fig. 12

**Fig. 13**

**Fig. 14**

**Fig. 15**

**Fig. 16**

**Fig. 17**

**Fig. 18**

Fig. 19

Fig. 20

Fig. 21

**EP 4 303 194 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2899164 A1
- WO 2019175603 A1